# EUROPEAN PATENT SPECIFICATION

(11) **EP 3 636 600 B1**
(45) Date of publication and mention of the grant of the patent: **30.11.2022**
(21) Application number: 18199162.1
(22) Date of filing: 08.10.2018
(51) Int. Cl.: C02F 1/42, B01J 39/04, C02F 1/00, B01J 41/04, B01J 47/016, B01J 41/07, B01J 41/05, B01J 39/17, B01J 39/12, B01J 39/10, B01J 39/07, B01J 39/05, B01J 20/34, B01J 20/26, B01J 20/20, B01J 20/16, B01J 20/12, B01J 20/10, C02F 101/20

(54) **A SORPTION COMPOSITION FOR COMPLEX WATER PURIFICATION**
SORPTIONSMATERIAL ZUR KOMPLEXEN WASSERREINIGUNG
COMPOSITION DE SORPTION POUR PURIFICATION D'EAU COMPLEXE

(43) Date of publication of application: 15.04.2020
(73) Proprietor: EWI bvba, 9000 Gent (BE)
(72) Inventor: MITCHENKO, Andrii, 9000 Gent (BE); MITCHENKO, Tetiana, 9000 Gent (BE)
(74) Representative: Brantsandpatents bvba

(56) References cited:
- RU-C2- 2 328 333
- US-A1- 2010 176 044
- US-A1- 2016 289 086

## Description

### Field of the invention

The invention relates to the field of water purification and water treatment, more particularly to sorption-filtering mixtures for complex purification of water coming from various water supply sources, both surface and artesian, in order to produce water of high drinking quality.

More specifically, the present invention relates to sorption purifying compositions capable to effectively remove iron and manganese from water. In some cases, the present invention may also be used to purify special-purpose water for various industries.

### Background of the invention

Natural water is a complex multicomponent system containing dissolved mineral substances, coarse particles, colloidal particles, organic compounds, and microorganisms. A separate industry deals with water purification from various impurities to produce water of drinking quality.

According to UNICEF and WHO, nearly 780 million people in the world use water from uncontrolled water supply sources and approximately the same number of people use contaminated water from controlled sources to meet their needs in household and drinking water. For this reason, the United Nations has proclaimed the reduction of the levels of contamination of water sources and improvement of the drinking water quality around the world as one of the priority tasks. Those skilled in the art know that water intended for drinking and household purposes, even after centralized water treatment, may still contain a variety of mineral and organic compounds and complexes thereof and may have increased contents of hardness salts, various forms of iron, manganese, aluminum, organic substances, and other contaminants and, as such, may be of poor quality.

Today, international organizations are paying particular attention to local sources of water supply - artesian wells. Since the mineral composition of artesian water varies, therefore, in this case, the typical problems of water treatment to produce water of drinking quality are removing hardness from drinking water, removing all impurities of iron, manganese, hydrogen sulfide and organic substances of natural origin. Arsenic is one of the most undesirable contaminants of groundwater. The problem with arsenic compounds in drinking water sources found global resonance in 1995 after WHO published the results of studies completed in India and Bangladesh which reported high mortality rates of employable population. At present, in most countries of the world, MAC for arsenic in drinking water is set at 10 µg/dm³. Unfortunately, the majority of available water treatment technologies does not ensure compliance with this standard (Maletsky Z.V., Hybrid Sorbents and Their Use in the Processes of Water Purification from Iron and Arsenic, synopsis of the thesis for the degree of a candidate of technical sciences, Kyiv, 2013).

The most typical problem with normalization of organoleptic parameters of drinking water and reduction of color and turbidity of water lies in the simultaneous reduction of concentrations of the entire variety of contaminants. In this case, the most relevant problems for the current technologies are the removal of impurities of iron, manganese and carbonate salts (carbonate hardness). For selective removal of a single type of impurity, many respective selective filters may be used to separate a certain prevailing impurity from the total volume of the solution passing through a filter. In general, such selective filters are effectively applied for technical water filtration in certain industries; however such technologies are not very suitable for purification of drinking water containing a variety of impurities.

Multicomponent mixtures of filtering materials of various types used for complex purification of drinking water are known in the prior art (patents RU2328333, RU2162010 and RU2084279). The most common mixtures include activated carbon, ion-exchange resins, natural and modified aluminosilicates, and fiber filtration materials applied either alone or in mixtures. Multicomponent compositions containing a mixture of filtering materials of various types are used for high-quality complex water purification, and the separation of layers in water treatment columns in a certain sequence is recommended for the best performance (RU2179531, RU2043310, and RU2174956).

Sorption compositions based on ion-exchange resins - organic polymers - are considered to be the most efficient means for water purification. Ion-exchange resins capable of anion-exchange are widely used for water treatment, in particular for the removal of anions of salts and/or acids. Ion-exchange resins capable of cation-exchange are widely used for water treatment, in particular for the removal of cations of alkaline earth metals which contribute to water hardness, i.e. for water softening. However, when used for water treatment, the known anion-exchange resins are unable to inhibit the formation of various types of salt deposits, in particular hardness salts and corrosion products, and destroy such deposits simultaneously. At the same time, the known cation-exchange resins are able to inhibit the formation of deposits of hardness salts only in part and over a short period of time by removing cations of alkaline earth metals, releasing cations of other metals into water and thereby modifying the ion composition of water under treatment.

### Summary of the invention

The aim of the present invention is to simultaneously and efficiently reduce concentrations of all contaminants, or individual combinations thereof, present in water in order to produce water which meets the current drinking water quality requirements and is suitable for consumption without any subsequent treatment.

The object of the present invention is to develop a complex multipurpose sorption-filtering mixture for high-quality water purification by removing a variety of impurities - such as various forms of iron, manganese, arsenic, organic compounds, etc. - in a more efficient manner, achieving a higher degree of water purification from hardness salts including a high degree of water purification from metals, in particular from iron to a level of less than 0.1 mg/l and manganese to a level less than 0.05 mg/l.

Thus, the object of the present invention is to provide such complex sorption-filtering composition of a variety of specific sorption-filtering purifying components which characteristics may substantially vary, in particular by percentage ratios in a mixture, particle size, density and particle hydrophilicity factor; such a composition would allow to purify water from various contaminants in an efficient manner. The technical result - improved efficiency of water purification from various contaminants - is achieved through new features, specifically the optimal quantitative ratio of the components according to the present invention, i.e. a kind of so-called "synergism" of components in the mixture, which is the interaction of two or more factors so that the effect of their combination exceeds the one anticipated based on the response to each factor applied separately. The present invention is based on studies showing that the components used for sorption, in particular ion-exchange resins, known for their sorption efficiency when applied alone, exhibit a synergistic effect when applied in a certain combination.

To solve the existing technical problems, the invention provides a sorption composition for complex water purification according to claim 1.

The sorption composition for complex water purification disclosed herein comprises a sorbent having cation-exchange properties present at least at more than 40% by volume, a sorbent having anion-exchange properties present at 1-15 % by volume, an iron- and/or manganese-selective sorbent present at 1-15 % by volume, a granular polymer material present at 3-15% by volume, a granular filtering material present at 3-15% by volume. The said components have the following surface hydrophilicity factors: the sorbent having cation-exchange properties - >3 kJ/kJ, the sorbent having anion-exchange properties - 0.2-0.6 kJ/kJ, the iron- and/or manganese-selective sorbent - 1.05-3.5 kJ/kJ, the granular polymer material - ≤1 kJ/kJ, the granular filtering material - > 1 kJ/kJ. The said components have the following density: the sorbent having cation-exchange properties - 1.15-1.35 g/cm³, the sorbent having anion-exchange properties - 1.02-1.1 g/cm³, the iron- and/or manganese-selective sorbent - 1.02-1.1 g/cm³, the granular polymer material - less than 1 g/cm³, and density of the granular filtering material is greater than that of any other component.

Further, the said components have the following granule size: the sorbent having cation-exchange properties - 0.3-1.2 mm, the sorbent having anion-exchange properties - 0.3-1.2 mm, the iron- and/or manganese-selective sorbent - 0.3-1.2 mm, the granular polymer material - 2,5-4 mm, and the granular filtering material - 2-5 mm.

The iron- and/or manganese-selective sorbent is a hybrid sorbent.

The hybrid sorbent is an ion-exchanger modified with organic aromatic compounds.

Disclosed herein is also a water purification device consisting of a filter and a tank for the preparation of a concentrated salt solution, the said filter consists of a filter housing, a top drain, a central pipe with a bottom drain, and a control valve. In preferred embodiments, said filter is configured so that it can be filled with the said sorption composition, the said control valve is configured so that it can be connected to a water supply source and to the tank for the preparation of a concentrated salt solution and is also configured so that it can be connected to a purified water receiver and a sewerage system.

Disclosed herein is also a water purification method wherein water and a salt and/or acid solution are filtered through a layer of the said sorption composition in the said device. In preferred embodiments, the sorption composition is separated along the height of the device by allowing a salt and/or acid solution with a density of more than 1 g/cm³ to flow through the sorption composition before the water purification process is started.

### Detailed description of the invention

The sorption composition for complex water purification comprises a sorbent having cation-exchange properties, a sorbent having anion-exchange properties, an iron- and/or manganese-selective sorbent, a granular polymer material, a granular filtering material with the following volumetric ratio of the components:
the sorbent having cation-exchange properties present at least at 40 % by volume,
the sorbent having anion-exchange properties present at 1-15 % by volume,
the iron- and/or manganese-selective sorbent present at 1-15 % by volume,
the granular polymer material present at 3-15% by volume,
the granular filtering material present at 3-15% by volume,
the said components have the following surface hydrophilicity factors:
the sorbent having cation-exchange properties - > 3 kJ/kJ,
the sorbent having anion-exchange properties - 0.2-0.6 kJ/kJ,
the iron- and/or manganese-selective sorbent - 1.05-3.5 kJ/kJ,
the granular polymer material - ≤1 kJ/kJ,
the granular filtering material - > 1 kJ/kJ.

The said components have the following density:
the sorbent having cation-exchange properties - 1.15-1.35 g/cm³;
the sorbent having anion-exchange properties - 1.02-1.1 g/cm³;
the iron- and/or manganese-selective sorbent - 1.02-1.2 g/cm³;
the granular polymer material - less than 1 g/cm³;
density of the granular filtering material is greater than that of any other component.

Further, the components of the sorption composition for water purification have the following granule size:
the sorbent having cation-exchange properties - 0.3-1.2 mm;
the sorbent having anion-exchange properties- 0.3-1.2 mm;
the iron- and/or manganese-selective sorbent- 0.3-1.2 mm;
the granular polymer material - 2.5-4 mm;
the granular filtering material - 2-5 mm.

The hydrophilicity factor is determined by the ratio of the enthalpy of immersion in water and the enthalpy of immersion in benzene.

A hybrid sorbent is an iron- and/or manganese-selective sorbent.

An ion-exchanger modified with organic aromatic compounds is a hybrid sorbent.

A hybrid sorbent is an ion-exchanger modified with organic aromatic compounds, having the structure of M-R₁-R₂-R₃, wherein M-R₁ is an ion-exchanger having a polymer matrix M and R₁ functional groups, R₂-R₃ is a modifier, wherein R₂ group is functionally linked to R₁ ion-exchanger group, R₃ group lies on the surface of the sorbent, and R₁ is dimethylamine weak-base, trimethylamine strong-base, dimethylethanolamine strong-base, aminophosphonic, carboxylic, sulfonic or (2R,3R,4R,5S)-6-(methylamino)hexane-1,2,3,4,5-pentoleic functional groups; the modifier R₂-R₃ is selected from the group consisting of 2,3-dihydroxy-5-({[(2R,3R,4S,5R,6R)-3,4,5,6-tetrakis({3,4-dihydroxy-5-[(3,4,5-trihydroxyphenyl)carbonyloxy]phenyl} carbonyloxy)oxan-2-yl]methoxy} carbonyl)phenyl-3,4,5-trihydroxybenzoate; 3,4,5-trihydroxybenzoic acid; (2R,3S)-2-(3,4-dihydroxyphenyl)-3,4-dihydro-2H-chromene-3,5,7-triol; 3-phenyl-chromene-4-one; 4-phenylcoumarin; 2', 4', 5', 7'-tetrabromofluorescein; bis[N,N-bis(carboxymethyl)aminomethyl]fluorescein; (2S,3S,4S,5R,6S)-3,4,5-trihydroxy-6-(8-hydroxy-9-oxo-9H-xanthene-2-yloxy)-tetrahydro-pyran-2-carboxylic acid; a disodium salt of 2-amino-5-[(Z)-(4-amino-3-sulfonatophenyl)(4-imino-3-sulfonate-2,5-cyclohexadien-1-ylidene)methyl]-3-methylbenzenesulfonate; 2,7-dimethylacridine-3,6-diamine; bis[4-(dimethylamino)phenyl] methanaminium chloride; 7,11b-dihydroindeno[2,1-c]chromene-3,4,6a,9,10(6H)-pentol; a disodium salt of 4-amino-3-[4-[4-(1-amino-4-sulfonato-naphthalen-2-yl)diazenylphenyl]phenyl]diazenyl-naphthalene-1-sulfonate; tris(4-(dimethylamino)phenyl)methylium chloride; 3-[4-(dimethylamino)phenyl] prop-2-enal; ethyl-[4-[[4-[ethyl-[(3-sulfophenyl)methyl]amino]phenyl methylidene]-1-cyclohexa-2,5-dienylidene]-[(3-sulfophenyl)methyl]azanium]-(4-hydroxy-2-sulfophenyl)) or a mixture of any of these components either produced naturally or artificially in any ratio whatsoever.

In a preferred embodiment, the sorption composition further comprises a catalytic sorption material having a granule size of 0.3-3 mm, a surface hydrophilicity factor of 0.2-1.5 kJ/kJ and a density of 1-1.3 g/cm³.

In another embodiment, the sorption composition comprises a pH-adjusting agent - a material with limited solubility. When filtered through a layer of such material, water changes its pH level. In a further preferred embodiment, this material has a granule size of 0.3-3 mm, a surface hydrophilicity factor of 0.2-1.5 kJ/kJ, and a density of 1-1.3 g/cm³.

In a preferred embodiment, the sorption composition further comprises an adjusting agent for the total salt content.

In another preferred embodiment, the sorption composition further comprises a nitrate-selective sorbent having anion-exchange properties.

In a preferred embodiment, the sorption composition further comprises an arsenic-selective sorbent and/or a selenium-selective sorbent, a uranium-selective sorbent and/or a boron-selective sorbent and/or a perchlorate-selective sorbent having anion-exchange properties and/or or a radium-selective sorbent and/or affinity sorbent and/or perlite and/or cadmium-, mercury-, lead-, chromium-, cobalt-, nickel-, copper-, zinc-, silver-, tin-, thallium- selective sorbent or a sorbent selective to compounds or mixtures thereof.

Further, the composition may comprise a sorbent selective to trihalomethanes.

In the most preferred embodiment, a sorbent having cation-exchange properties is selected from the group consisting of a styrene-divinylbenzene cation-exchanger having a gel or macroporous structure and comprising strong-acid functional groups, an acryl-divinylbenzene cation-exchanger having a gel or macroporous structure and comprising weak-acid functional groups, a styrene-divinylbenzene cation-exchanger having macroporous structure and comprising aminomethylphosphonium groups, and a styrene-divinylbenzene cation-exchanger having a macroporous structure and comprising iminodiacetate groups.

In another most preferred embodiment, a sorbent having anion-exchange properties is selected from the group consisting of a styrene-divinylbenzene anion-exchanger having a gel or macroporous structure and comprising trimethylamine functional groups, a styrene-divinylbenzene anion-exchanger having a gel or macroporous structure and comprising dimethylethanolamine functional groups, a styrene-divinylbenzene anion-exchanger having a gel or macroporous structure and comprising dimethylamine functional groups, a phenol-formaldehyde anion-exchanger having a macroporous structure and comprising weak-base functional groups, and an acryl- or methacryl-divinylbenzene anion-exchanger having a gel or macroporous structure and comprising trimethylamine or dimethylamine functional groups.

A granular polymer material is a polymer wherein a monomer unit contains ethylene, oxymethylene, propylene, ethylene terephthalate, vinyl chloride, vinylidene chloride, styrene, aryl sulfone, or is a copolymer of these monomer units.

In the most preferred embodiment, a granular filtering material is selected from the group comprising anthracite, quartz sand, gravel, dolomite, almandine, silicon, aluminosilicate, borosilicate, activated carbon, catalytic activated carbon, zeolite, shungite, pyrolusite, clay pellets.

In the most preferred embodiment, the polymer matrix of the ion-exchanger M has a gel structure.

In another most preferred embodiment, the polymer matrix of the ion-exchanger M has a macroporous structure.

The polymer matrix is formed by copolymerization of styrene and divinylbenzene or by copolymerization of derivatives of acrylic acid and divinylbenzene.

In a further aspect, it is disclosed herein a water purification device comprising a filter and a tank for the preparation of a concentrated salt solution, the said filter consists of a filter housing, a top drain, a central pipe with a bottom drain and a control valve; the said filter is configured to be filled with the said sorption composition, and the control valve is configured to connect to a water supply source and to the tank for preparation of a concentrated salt solution and is also configured to be connected to a purified water receiver and a sewerage system.

This water purification device can advantageously be used in combination with the synergistic sorption composition from the first aspect.

In a preferred embodiment, the filter housing is a cylindrical container having a mouth for loading and unloading of the sorption composition and a threaded fastener to connect the control valve.

In an example, the top drain and the bottom drain is a hollow body with filtering holes thereon.

In an example, the control valve is configured so that it can switch water flows in different modes of operation of the device.

In an example, the tank for the preparation of a concentrated salt solution is a container with a built-in device for taking the solution and filling the tank with water, configured to connect to the control valve.

The examples allow the device to cycle between a filtration process in which the sorption mixture purifies water, and a regeneration process in which the sorption mixture is regenerated, preferably using a salt and/or acid solution. The sorption mixture can advantageously be separated based on granule size and density size using a liquid with a density higher than 1g/cm³. This allows a simple filter housing to hold and allow to regenerate an inhomogeneous sorption mixture while advantageously also permitting sequential filtration. The simplicity of the device is advantageous for the use in many areas where drinking water is sparse.

Also disclosed herein is a water purification method wherein water and a salt and/or acid solution are filtered cyclically through a layer of the said sorption composition in the said device.

In an example of the method, before the water purification process is started, the sorption composition is separated along the height of the device by allowing a salt and/or acid solution with a density of more than 1 g/cm³ to flow through the sorption composition.

In a further example, the salt and/or acid solution is prepared from sodium chloride and/or potassium chloride and/or hydrochloric acid and/or orthophosphoric acid.

In an example, water is filtered sequentially through a layer of each individual component of the sorption composition.

In an example, water is filtered by supplying water coming from a water supply source through the control valve and the top drain into the filter housing of the water purification device, water is filtered through a layer of the said sorption composition, the filtrate is then removed from the filter housing through the bottom drain, the central tube and the control valve to the purified water receiver.

In another example, water is filtered by supplying water coming from a water supply source through the control valve and the bottom drain and the central pipe to the filter housing of the water purification device, the water is filtered through a layer of the said sorption composition, and the filtrate then is removed from the filter housing through the top drain and control valve to the purified water receiver.

In an example, water filtration is cyclically alternated by filtration of a salt and/or acid solution by switching the flow with the control valve and supplying a salt and/or acid solution from the tank to prepare a concentrated solution.

The method provides a simple method and device which advantageously use the sorption mixture of the first aspect to provide good water purification in a durable way. The synergistic sorption mixture is used sequentially to improve the filtration in water. The sorption mixture is separated by granule size and density through flow by a liquid with a density higher than 1g/cm³. The sorption mixture is regenerated by an acid/salt mixture. This acid/salt mixture can advantageously be the liquid with a density higher than 1g/cm³. The sorption mixture, device and method allow a combination of good purification of water, longevity of the sorption mixture through regeneration and ease of use for the consumer.

Below are the examples of specific formulations of the sorption composition for complex water purification within the proposed set of features. All mixtures consisted of five components - ion-exchangers and adsorption materials. In some examples, the characteristics of the components were taken in accordance with the parameters stated in the claims for a particular substance, such as granule size, density and particle hydrophilicity.

The sorbent compositions were prepared by thorough mixing of components, loaded into a filter (a cylindrical vessel mounted vertically) and passed 5 v/v of water in a upward direction and then in a downward direction at a rate of 20 v/v. The mixture separated in the process of washing and passing water.

### Example 1 (not according to the invention)

Table 1 shows the following characteristics of the components of the sorption composition and their amounts in the mixture loaded into the purifier:
the weak-acid cation-exchanger IMAC^{™} HP333 (granule size: 0.3-1.2 mm, density:
1.15-1.35 g/cm³, surface hydrophilicity factor: more than 3 kJ/kJ);
the high-base anion-exchanger DOWEX Marathon A (granule size: 0.3-1.2 mm, density: 1.02-1.1 g/cm³, surface hydrophilicity factor: 0.2-0.6 kJ/kJ);
the iron- and manganese-selective sorbent Indion ISR (granule size: 0.3-1.2 mm, density: 1.02-1.1 g/cm³, surface hydrophilicity factor: 1.05-3.5 kJ/kJ);
the granular polymer material - polystyrene PSM-115 (granule size: 2.5-4 mm, density: less than 1 g/cm³, surface hydrophilicity factor: less than or equal to 1 kJ/kJ);
the granular filtering material AquaQuartz (granule size: 2-5 mm, density: more than that of any other component, surface hydrophilicity factor: more than 1 kJ/kJ).

**Table 1**

| Sorbent type | Trademark of the sorbent | Percent in the com position |
|---|---|---|
| Sorbent having cation-exchange properties | IMAC^{™} HP333 | 40% |
| Sorbent having anion-exchange properties | Dowex Marathon A | 15% |
| Iron- and manganese-selective sorbent | Indion ISR | 6% |
| Granular polymer material | PSM-115 | 15% |
| Granular filtering material | AquaQuartz | 15% |

Table 2 shows the results of water purification with the said composition loaded into the purifier within the said ranges of contaminant concentrations.

**Table 2**

| Impurity | Concentration | | Degree of purification |
|---|---|---|---|
| | in source water | in purified water | |
| Hardness salts (Ca, Mg) | 8 mg-equ/l | 0.9 mg-equ/l | 89% |
| Total iron (Fe) | 1.8 mg/l | 0.3 mg/l | 83% |
| Manganese (Mn) | 0.1 mg/l | < 0.05 mg/l | > 50% |
| Chemical oxygen demand (COD) with permanganate as the oxidant | 11 mg-O₂/l | 5 mg-O₂/l | 55% |
| Cobalt (Co) | 0.9 mg/l | < 0.1 mg/l | > 89% |
| Plumbum (Pb) | 0.05 mg/l | < 0.01 | > 80% |

### Example 2 (not according to the invention)

Table 3 shows the following composition of the components:
the strong-acid cation-exchanger Purolite^{®} C150 (granule size: 0.3-1.2 mm, density: 1.15-1.35 g/cm³, surface hydrophilicity factor: more than 3 kJ/kJ);
the strong-base anion-exchanger Purofine^{®} PFA860 (granule size: 0.3-1.2 mm, density: 1.02-1.1 g/cm³, surface hydrophilicity factor: 0.2-0.6 kJ/kJ);
the iron- and manganese-selective sorbent Indion ISR (granule size: 0.3-1.2 mm, density: 1.02-1.1 g/cm³, surface hydrophilicity factor: 1.05-3.5 kJ/kJ);
the granular polymer material - polystyrene PSM-115 (granule size: 2.5-4 mm, density: less than 1 g/cm³, surface hydrophilicity factor: less than or equal to 1 kJ/kJ);
the granular filtering material AquaQuartz (granule size: 2-5 mm, density: more than that of any other component, surface hydrophilicity factor: more than 1 kJ/kJ

**Table 3**

| Sorbent type | Trademark of the sorbent | Percent in the composition |
|---|---|---|
| Sorbent having cation-exchange properties | Purolite^{®} C150 | 60% |
| Sorbent having anion-exchange properties | Purofine^{®} PFA860 | 1.5% |
| Iron- and manganese-selective sorbent | Indion ISR | 8.5% |
| Granular polymer material | PSM-115 | 15% |
| Granular filtering material | AquaQuartz | 15% |

Table 4 shows the results of water purification with the said composition loaded into the purifier within the said ranges of contaminant concentrations.

**Table 4**

| Impurity | Concentration | | Degree of purification |
|---|---|---|---|
| | in source water | in purified water | |
| Hardness salts (Ca, Mg) | 15 mg-equ/l | 0.1 mg-equ/l | 99% |
| Total iron (Fe) | 1.6 mg/l | 0.4 mg/l | 75% |
| Manganese (Mn) | 0.15 mg/l | <0.05 mg/l | 67% |
| Chemical oxygen demand (COD) with permanganate as the oxidant | 12 mg-O₂/l | 1 mg-O₂/l | 92% |
| Turbidity | 4 NTU | 0.5 NTU | 88% |

### Example 3 (not according to the invention)

Table 5 shows the following composition:
the strong-acid cation-exchanger Purolite^{®} C150 (granule size: 0.3-1.2 mm, density: 1.15-1.35 g/cm³, surface hydrophilicity factor: more than 3 kJ/kJ);
the strong-base anion-exchanger Purofine^{®} PFA860 (granule size: 0.3-1.2 mm, density: 1.02-1.1 g/cm³, surface hydrophilicity factor: 0.2-0.6 kJ/kJ);
the iron- and manganese-selective sorbent xGnp-C-750 (granule size: 0.3-1.2 mm, density: 1.02-1.1 g/cm³, surface hydrophilicity factor: 1.05-3.5 kJ/kJ);
the granular polymer material - polystyrene PSM-115 (granule size: 2,5-4 mm, density: less than 1 g/cm³, surface hydrophilicity factor: less than or equal to 1 kJ/kJ);
the granular filtering material AquaQuartz (granule size: 2-5 mm, density: more than that of any other component, surface hydrophilicity factor: more than 1 kJ/kJ).

**Table 5**

| Sorbent type | Trademark of the sorbent | Percent in the composition |
|---|---|---|
| Sorbent having cation-exchange properties | Purolite^{®} C150 | 83% |
| Sorbent having anion-exchange properties | Dowex Marathon A | 1% |
| Iron- and manganese-selective sorbent | xGnp-C-750 | 6% |
| Granular polymer material | PSM-115 | 5% |
| Granular filtering material | AquaQuartz | 5% |

The results of water purification from impurities are shown in Table 6 below.

**Table 6**

| Impurity | Concentration | | Degree of purification |
|---|---|---|---|
| | in source water | in purified water | |
| Hardness salts (Ca, Mg) | 8 mg-equ/l | 0.9 mg-equ/l | 89% |
| Total iron (Fe) | 1.25 mg/l | 0.05 mg/l | 96% |
| Manganese (Mn) | 0.25 mg/l | < 0.05 mg/l | 80% |
| Chemical oxygen demand (COD) with permanganate as the oxidant | 15 mg-O₂/l | 6 mg-O₂/l | 60% |
| Total microbial count (TMC) | 320 CFU/ml | 12 CFU/ml | 96% |

### Example 4 (not according to the invention)

Table 7 shows the following composition loaded into the purifier:
the weak-acid cation-exchanger IMAC^{™} HP333 (granule size: 0.3-1.2 mm, density: 1.15-1.35 g/cm³, surface hydrophilicity factor: more than 3 kJ/kJ);
the high-base anion-exchanger DOWEX Maraton A (granule size: 0.3-1.2 mm, density: 1.02-1.1 g/cm³, surface hydrophilicity factor: 0.2-0.6 kJ/kJ);
the iron- and manganese-selective sorbent Indion ISR (granule size: 0.3-1.2 mm, density: 1.02-1.1 g/cm³, surface hydrophilicity factor: 1.05-3.5 kJ/kJ);
the granular polymer material - polystyrene PSM-115 (granule size: 2,5-4 mm, density: less than 1 g/cm³, surface hydrophilicity factor: less than or equal to 1 kJ/kJ);
the granular filtering material Foshan Huatai Super White Quartz Sand (granule size: 2-5 mm, density: more than that of any other component, surface hydrophilicity factor: more than 1 kJ/kJ).

**Table 7**

| Sorbent type | Trademark of the sorbent | Percent in the composition |
|---|---|---|
| Sorbent having cation-exchange properties | IMAC^{™} HP333 | 52% |
| Sorbent having anion-exchange properties | Dowex Marathon A | 15% |
| Iron- and manganese-selective sorbent | Indion ISR | 15% |
| Granular polymer material | PSM-118 | 3% |
| Granular filtering material | Foshan Huatai Super White Quartz Sand | 15% |

The study results are shown below.

**Table 8**

| Impurity | Concentration | | Degree of purification |
|---|---|---|---|
| | in source water | in purified water | |
| Hardness salts (Ca, Mg) | 7 mg-equ/l | 0.3 mg-equ/l | 95% |
| Total iron (Fe) | 2.5 mg/l | 0.2 mg/l | 92% |
| Manganese (Mn) | 0.1 mg/l | < 0.05 | > 50% |
| Chemical oxygen demand (COD) with permanganate as the oxidant | 5 mg-O₂/l | 4 mg-O₂/l | 20% |
| Turbidity | 8 NTU | < 0.5 NTU | 94% |
| Nitrates (NO₃⁻) | 150 mg/l | 5 mg/l | 97% |

### Example 5

Table 9 shows the following composition loaded into the purifier:
the weak-acid cation-exchanger DOWEX^{™} HCR S/S FF (granule size: 0.3-1.2 mm, density: 1.15-1.35 g/cm³, surface hydrophilicity factor: more than 3 kJ/kJ);
the high-base anion-exchanger Lewatit^{®} A 365 (granule size: 0.3-1.2 mm, density: 1.02-1.1 g/cm³, surface hydrophilicity factor: 0.2-0.6 kJ/kJ);
the iron- and manganese-selective sorbent (granule size: 0.3-1.2 mm, density: 1.02-1.1 g/cm³, surface hydrophilicity factor: 1.05-3.5 kJ/kJ);
the granular polymer material - polystyrene PSM-115 (granule size: 2,5-4 mm, density: less than 1 g/cm³, surface hydrophilicity factor: less than or equal to 1 kJ/kJ);
the granular filtering material Clay Pellets M800 (granule size: 2-5 mm, density: more than that of any other component, surface hydrophilicity factor: more than 1 kJ/kJ).

**Table 9**

| | | |
|---|---|---|
| Sorbent having cation-exchange properties | DOWEX^{™} HCR S/S FF | 48% |
| Sorbent having anion-exchange properties | Lewatit^{®} A 365 | 7% |
| Iron- and manganese-selective sorbent | ion-exchanger with trimethylamine strong-base functional groups, modified with 4-phenylcoumarin | 15% |
| Granular polymer material | PSM-118 | 15% |
| Granular filtering material | Clay Pellets M800 | 15% |

The results of water purification from impurities are shown below.

**Table 10**

| Impurity | Concentration | | Degree of purification |
|---|---|---|---|
| | in source water | in purified water | |
| Hardness salts (Ca, Mg) | 16 mg-equ/l | 1.5 mg-equ/l | 91% |
| Total iron (Fe) | 3.5 mg/l | 0.05 mg/l | 99% |
| Manganese (Mn) | 1.2 mg/l | < 0.05 mg/l | >96% |
| Chemical oxygen demand (COD) with permanganate as | 17 mg-O₂/l | 4 mg-O₂/l | 76% |
| the oxidant | | | |
| Sulfates (SO₄²⁻) | 1,200 mg/l | 120 mg/l | 90% |
| Turbidity | 8 NTU | < 0.5 NTU | > 94% |

### Example 6 (not according to the invention)

Table 11 shows the following composition loaded into the purifier:
the weak-acid cation-exchanger DOWEX IDA-1 (granule size: 0.3-1.2 mm, density: 1.15-1.35 g/cm³, surface hydrophilicity factor: more than 3 kJ/kJ);
the high-base anion-exchanger DOWEX^{™} UPCORE MONO A2-500 (granule size: 0.3-1.2 mm, density: 1.02-1.1 g/cm³, surface hydrophilicity factor: 0.2-0.6 kJ/kJ);
the iron- and manganese-selective sorbent Indion ISR (granule size: 0.3-1.2 mm, density: 1.02-1.1 g/cm³, surface hydrophilicity factor: 1.05-3.5 kJ/kJ);
the granular polymer material - polystyrene PSM-115 (granule size: 2,5-4 mm, density: less than 1 g/cm³, surface hydrophilicity factor: less than or equal to 1 kJ/kJ);
the granular filtering material AquaQuartz (granule size: 2-5 mm, density: more than that of any other component, surface hydrophilicity factor: more than 1 kJ/kJ).

**Table 11**

| Sorbent type | Trademark of the sorbent | Percent in the com position |
|---|---|---|
| Sorbent having cation-exchange properties | DOWEX IDA-1 | 55% |
| Sorbent having anion-exchange properties | DOWEX^{™} UPCORE MONO A2-500 | 10% |
| Iron- and manganese-selective sorbent | Indion ISR | 15% |
| Granular polymer material | PSM-115 | 10% |
| Granular filtering material | AquaQuartz | 10% |

The study results are shown in Table 12 below.

**Table 12**

| Impurity | Concentration | | Degree of purification |
|---|---|---|---|
| | in source water | in purified water | |
| Hardness salts (Ca, Mg) | 5 mg-equ/l | 1.5 mg-equ/l | 70% |
| Total iron (Fe) | 1.75 mg/l | 0.25 mg/l | 85% |
| Manganese (Mn) | 0.95 mg/l | < 0.05 mg/l | 95% |
| Chemical oxygen demand (COD) with permanganate as the oxidant | 2 mg-O₂/l | 1.5 mg-O₂/l | 25% |
| Turbidity | 8 NTU | < 0.5 NTU | > 94% |
| Copper (Cu) | 2.5 mg/l | 0.6 mg/l | 76% |
| Zinc (Zn) | 1.5 mg/l | < 0.05 mg/l | 97% |
| Cadmium (Cd) | 0.05 mg/l | < 0.001 mg/l | 98% |

### Example 7

Table 13 shows the following composition loaded into the purifier:
the weak-acid cation-exchanger AMBERLITE^{™} IRC86 (granule size: 0.3-1.2 mm, density: 1.15-1.35 g/cm³, surface hydrophilicity factor: more than 3 kJ/kJ);
the high-base anion-exchanger AMBERLITE^{™} IRA900 (granule size: 0.3-1.2 mm, density: 1.02-1.1 g/cm³, surface hydrophilicity factor: 0.2-0.6 kJ/kJ);
the iron- and manganese-selective sorbent (granule size: 0.3-1.2 mm, density: 1.02-1.1 g/cm³, surface hydrophilicity factor: 1.05-3.5 kJ/kJ);
the granular polymer material - polystyrene PSM-115 (granule size: 2,5-4 mm, density: less than 1 g/cm³, surface hydrophilicity factor: less than or equal to 1 kJ/kJ);
the granular filtering material Foshan Huatai Super White Quartz Sand (granule size: 2-5 mm, density: more than that of any other component, surface hydrophilicity factor: more than 1 kJ/kJ).

**Table 13**

| Sorbent type | Trademark of the sorbent | Percent in the com position |
|---|---|---|
| Sorbent having cation-exchange properties | AMBERLITE^{™} IRC86 | 74% |
| Sorbent having anion-exchange properties | AMBERLITE^{™} IRA900 | 15% |
| Iron- and manganese-selective sorbent | ion-exchanger with dimethylethanolamine strong-base functional groups, modified with 2', 4', 5', 7'-tet rabrom ofluorescein | 5% |
| Granular polymer material | PSM-115 | 3% |
| Granular filtering material | Foshan Huatai Super White Quartz Sand | 3% |

The results of water purification are shown in Table 14 below.

**Table 14**

| Impurity | Concentration | | Degree of purification |
|---|---|---|---|
| | in source water | in purified water | |
| Hardness salts (Ca, Mg) | 9 mg-equ/l | 0.6 mg-equ/l | 93% |
| Total iron (Fe) | 4 mg/l | 0.08 mg/l | 98% |
| Manganese (Mn) | 1.2 mg/l | <0.05 mg/l | >96% |
| Chemical oxygen demand (COD) with permanganate as the oxidant | 6 mg-O₂/l | 2 mg-O₂/l | 66% |
| Silicon | 12 mg/l | 0.5 mg/l | 96% |
| Turbidity | 7 NTU | 0.5 NTU | 92% |

### Example 8 (not according to the invention)

Table 13 shows the following composition loaded into the purifier:
the weak-acid cation-exchanger AMBERLITE^{®} IRC747 (granule size: 0.3-1.2 mm, density: 1.15-1.35 g/cm³, surface hydrophilicity factor: more than 3 kJ/kJ);
the high-base anion-exchanger AMBERLITE^{™} IRA67 (granule size: 0.3-1.2 mm, density: 1.02-1.1 g/cm³, surface hydrophilicity factor: 0.2-0.6 kJ/kJ);
the iron- and manganese-selective sorbent Indion ISR (granule size: 0.3-1.2 mm, density: 1.02-1.1 g/cm³, surface hydrophilicity factor: 1.05-3.5 kJ/kJ);
the granular polymer material - polystyrene PSM-115 (granule size: 2,5-4 mm, density: less than 1 g/cm³, surface hydrophilicity factor: less than or equal to 1 kJ/kJ);
the granular filtering material FilterAg+ - (granule size: 2-5 mm, density: more than that of any other component, surface hydrophilicity factor: more than 1 kJ/kJ).

**Table 15**

| Sorbent type | Trademark of the sorbent | Percent in the com position |
|---|---|---|
| Sorbent having cation-exchange properties | AMBERLITE^{®} IRC747 | 85% |
| Sorbent having anion-exchange properties | AMBERLITE^{™} IRA67 | 2,5% |
| Iron- and manganese-selective sorbent | Indion ISR | 2,5% |
| Granular polymer material | PSM-115 | 5% |
| Granular filtering material | FilterAg+ | 5% |

**Table 16**

| Impurity | Concentration | | Degree of purification |
|---|---|---|---|
| | in source water | in purified water | |
| Hardness salts (Ca, Mg) | 7 mg-equ/l | 0.2 mg-equ/l | 97% |
| Total iron (Fe) | 1.2 mg/l | 0.2 mg/l | 83% |
| Manganese (Mn) | 0.1 mg/l | < 0.05 mg/l | > 50% |
| Chemical oxygen demand (COD) with permanganate as the oxidant | 12 mg-O₂/l | < 1 mg-O₂/l | 92% |
| Copper (Cu) | 6 mg/l | 0.1 mg/l | 98% |
| Nickel (Ni) | 1.1 mg/l | 0.01 mg/l | 99% |
| Turbidity | 11 NTU | 0.5 NTU | 95% |

### Example 9

Table 17 shows the following composition loaded into the purifier:
the weak-acid cation-exchanger AMBERLITE^{™} SR1L (granule size: 0.3-1.2 mm, density: 1.15-1.35 g/cm³, surface hydrophilicity factor: more than 3 kJ/kJ);
the high-base anion-exchanger D.E.R.^{™} 669E (granule size: 0.3-1.2 mm, density: 1.02-1.1 g/cm³, surface hydrophilicity factor: 0.2-0.6 kJ/kJ);
the iron- and manganese-selective sorbent - a modified ion-exchanger with dimethylamine weak-base functional groups (granule size: 0.3-1.2 mm, density: 1.02-1.1 g/cm³, surface hydrophilicity factor: 1.05-3.5 kJ/kJ);
the granular polymer material - polystyrene PSM-115 (granule size: 2,5-4 mm, density: less than 1 g/cm³, surface hydrophilicity factor: less than or equal to 1 kJ/kJ);
the granular filtering material FilterAg (granule size: 2-5 mm, density: more than that of any other component, surface hydrophilicity factor: more than 1 kJ/kJ).

**Table 17**

| Sorbent type | Trademark of the sorbent | Percent in the com position |
|---|---|---|
| Sorbent having cation-exchange properties | AMBERLITE^{™} SR1 L | 60% |
| Sorbent having anion-exchange properties | D.E.R.^{™} 669E | 15% |
| Iron- and manganese-selective sorbent | ion-exchanger with dimethylamine weak-base functional groups, modified with (2R,3S)-2-(3,4-dihydroxyphenyl)-3,4-dihydro-2H-chromene-3,5,7-triol | 15% |
| Granular polymer material | PSM-115 | 5% |
| Granular filtering material | FilterAg | 5% |

The study results are presented below.

**Table 18**

| Impurity | Concentration | | Degree of purification |
|---|---|---|---|
| | in source water | in purified water | |
| Hardness salts (Ca, Mg) | 5 mg-equ/l | 0.5 mg-equ/l | 90% |
| Total iron (Fe) | 4.2 mg/l | 0.15 mg/l | 96% |
| Manganese (Mn) | 1.55 mg/l | <0.05 mg/l | >97% |
| Chemical oxygen demand (COD) with permanganate as the oxidant | 13 mg-O₂/l | 4 mg-O₂/l | 54% |
| Cadmium (Cd) | 0.01 mg/l | < 0.001 mg/l | 90% |
| Turbidity | 11 NTU | 0.5 NTU | 95% |

### Example 10 (not according to the invention)

Table 19 shows the following composition loaded into the purifier:
the weak-acid cation-exchanger IMAC^{™} HP333 (granule size: 0.3-1.2 mm, density: 1.15-1.35 g/cm³, surface hydrophilicity factor: more than 3 kJ/kJ);
the high-base anion-exchanger AMBERLITE^{™} IRA96 (granule size: 0.3-1.2 mm, density: 1.02-1.1 g/cm³, surface hydrophilicity factor: 0.2-0.6 kJ/kJ);
the modified iron- and manganese-selective sorbent DOWEX^{™} HCR S/S FF (granule size: 0.3-1.2 mm, density: 1.02-1.1 g/cm³, surface hydrophilicity factor: 1.05-3.5 kJ/kJ);
the granular polymer material polystyrene PSM-115 (granule size: 2,5-4 mm, density: less than 1 g/cm³, surface hydrophilicity factor: less than or equal to 1 kJ/kJ);
the granular filtering material Centaur^{®} (granule size: 2-5 mm, density: more than that of any other component, surface hydrophilicity factor: more than 1 kJ/kJ).

**Table 19**

| Sorbent type | Trademark of the sorbent | Percent in the com position |
|---|---|---|
| Sorbent having cation-exchange | IMAC^{™} HP333 | 68% |
| properties | | |
| Sorbent having an ion- exchange properties | AMBERLITE^{™} IRA96 | 7% |
| Iron- and manganese-selective sorbent | DOWEX^{™} HCR S/S FF, modified with sodium 2,3-dihydroxy-5-({ [(2R,3R,4S,5R,6R)-3,4,5,6-tetrakis({ 3,4-dihydroxy-5-[(3,4,5-trihydroxyphenyl) carbonyloxy]phenyl}carbonylox y) oxan-2-l]methoxy}carbonyl)phenyl-3,4,5-trihydroxybenzoate with an immobilized layer of iron compounds | 15% |
| Granular polymer material | PSM-115 | 5% |
| Granular filtering material | Centaur^{®} | 5% |

The results are presented in the table below.

**Table 20**

| Impurity | Concentration | | Degree of purification |
|---|---|---|---|
| | in source water | in purified water | |
| Hardness salts (Ca, Mg) | 18 mg-equ/l | 0.5 mg-equ/l | 97% |
| Total iron (Fe) | 5,2 mg/l | <0.2 mg/l | > 96% |
| Manganese (Mn) | 2,2 mg/l | < 0.05 mg/l | > 98% |
| Chemical oxygen demand (COD) with permanganate as the oxidant | 17.5 mg-O₂/l | 2 mg-O₂/l | 89% |
| Hydrogen sulfide (H₂S) | 1.8 mg/l | < 0.01 mg/l | > 99% |

### Example 11 (not according to the invention)

Table 21 shows the sorption composition with the main components corresponding to those of Example 1.

The said composition further comprises catalytic sorption material - Indion ORC impregnated with metal oxides.

**Table 21**

| Sorbent type | Trademark of the sorbent | Percent in the composition |
|---|---|---|
| Sorbent having cation-exchange properties | IMAC^{™} HP333 | 40% |
| Sorbent having anion-exchange properties | Dowex Marathon A | 12% |
| Iron- and manganese-selective sorbent | Indion ISR | 6% |
| Granular polymer material | PSM-115 | 12% |
| Granular filtering material | AquaQuartz | 12% |
| Catalytic sorption material | Indion ORC | 18% |

Table 22 shows the results of water purification with the said composition loaded into the purifier within the said ranges of contaminant concentrations.

**Table 22**

| Impurity | Concent rat ion | | Degree of purification |
|---|---|---|---|
| | in source water | in purified water | |
| Hardness salts (Ca, Mg) | 10 mg-equ/l | 0.5 mg-equ/l | 95% |
| Total iron (Fe) | 1.8 mg/l | 0.3 mg/l | 83% |
| Manganese (Mn) | 0.1 mg/l | < 0.05 mg/l | > 50% |
| Chemical oxygen demand (COD) with permanganate as the oxidant | 11 mg-O₂/l | 3 mg-O₂/l | 73% |
| Ammonium (NH₄OH) | 1.7 mg- 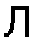 | <0.5 mg/l | 71% |
| Hydrogen sulfide (H₂S) | 0.8 mg/l | < 0.01 mg/l | 99% |
| Nitrates (NO₃⁻) | 120 mg/l | 5 mg/l | 96% |
| Chlorine (Cl₂) | 1.5 mg/l | 0.01 mg/l | 99% |

### Example 12 (not according to the invention)

Table 23 shows the sorption composition with the main components corresponding to those of Example 3 and further comprising an additional component - perlite Sinclair P10.

**Table 23**

| Sorbent type | Trademark of the sorbent | Percent in the composition |
|---|---|---|
| Sorbent having cation-exchange properties | Purolite^{®} C150 | 50% |
| Sorbent having anion-exchange properties | Dowex Marathon A | 1% |
| Iron- and manganese-selective sorbent | xGnp-C-750 | 6% |
| Granular polymer material | PSM-115 | 5% |
| Granular filtering material | AquaQuartz | 5% |
| Perlite | Sinclair P10 | 33% |

The results of water purification from impurities are shown in Table 24 below.

**Table 24**

| Impurity | Concentration | | Degree of purification |
|---|---|---|---|
| | in source water | in purified water | |
| Hardness salts (Ca, Mg) | 10 mg-equ/l | 1.2 mg-equ/l | 88% |
| Total iron (Fe) | 1.25 mg/l | 0.05 mg/l | 96% |
| Manganese (Mn) | 0.25 mg/l | <0.05 mg/l | > 80% |
| Chemical oxygen demand (COD) with permanganate as the oxidant | 15 mg-O₂/l | 1 mg-O₂/l | 93% |
| Total microbial count (TMC) | 320 CFU/ml | 12 CFU/ml | 96% |
| Oil products | 7 mg/l | < 0.1 mg/l | > 99% |
| *E. Coli* | 10 CFU/100 ml | absent | 100% |
| *Pseudomonas aeruginosa* | 6 CFU/100 ml | absent | 100% |
| *Enterococcus* | 50 CFU/100 ml | absent | 100% |

### Example 13 (not according to the invention)

Table 25 shows the sorption composition with the main components corresponding to those of Example 4 and further comprising an additional component - the arsenic-selective sorbent LEWATIT^{®}FO 36 present at 32% by weight.

**Table 25**

| Sorbent type | Trademark of the sorbent | Percent in the composition |
|---|---|---|
| Sorbent having cation-exchange properties | IMAC^{™} HP333 | 40% |
| Sorbent having anion-exchange properties | Dowex Marathon A | 9% |
| Iron- and manganese-selective sorbent | Indion ISR | 9% |
| Granular polymer material | PSM-118 | 1% |
| Granular filtering material | Foshan Huatai Super White Quartz Sand | 9% |
| Arsenic-selective sorbent | LEWATIT^{®}FO 36 | 32% |

The study results are shown in the table below.

**Table 26**

| Impurity | Concentration | | Degree of purification |
|---|---|---|---|
| | in source water | in purified water | |
| Hardness salts (Ca, Mg) | 7 mg-equ/l | 0.5 mg-equ/l | 93% |
| Total iron (Fe) | 2,5 mg/l | 0.2 mg/l | 92% |
| Manganese (Mn) | 0.1 mg/l | < 0.05 | 50% |
| Chemical oxygen demand (COD) with permanganate as the oxidant | 5 mg-O₂/l | 4 mg-O₂/l | 20% |
| Turbidity | 8 NTU | < 0.5 NTU | 94% |
| Arsenic | 0.15 mg/l | 0.005 mg/l | 97% |
| Polyphosphates (based on PO₄³⁻) | 17 mg/l | 0.5 mg/l | 97% |
| Nitrates (NO₃⁻) | 250 mg/l | 5 mg/l | 98% |

### Example 14

Table 27 shows the sorption composition with the main components corresponding to those of Example 5 and further comprising an additional component - the nitrate-selective sorbent having anion-exchange properties DOWEX^{™} NSR-1.

**Table 27**

| | | |
|---|---|---|
| Sorbent having cation-exchange properties | DOWEX^{™} HCR S/S FF | 40% |
| Sorbent having anion-exchange properties | Lewatit^{®} A 365 | 5% |
| Iron- and manganese-selective sorbent | ion-exchanger with trimethylamine strong-base functional groups, modified with 4-phenylcoumarin | 10% |
| Granular polymer material | PSM-118 | 10% |
| Granular filtering material | Clay Pellets M800 | 10% |
| Nitrate-selective sorbent | DOWEX^{™} NSR-1 | 25% |

The results of water purification from impurities are shown in the table below.

**Table 28**

| Impurity | Concentration | | Degree of purification |
|---|---|---|---|
| | in source water | in purified water | |
| Hardness salts (Ca, Mg) | 16 mg-equ/l | 1.5 mg-equ/l | 91% |
| Total iron (Fe) | 3.5 mg/l | 0.05 mg/l | 99% |
| Manganese (Mn) | 1.2 mg/l | <0.05 mg/l | 96% |
| Chemical oxygen demand (COD) with permanganate as the oxidant | 17 mg-O₂/l | 2 mg-O₂/l | 88% |
| Sulfates (SO₄ ²⁻) | 1200 mg/l | 120 mg/l | 90% |
| Nitrates (NO3-) | 175 mg/l | < 5 mg/l | > 94% |
| Polyphosphates (based on PO₄³⁻) | 17 mg/l | 2 mg/l | 88% |
| Turbidity | 8 NTU | < 0.5 NTU | 94% |

### Example 15 (not according to the invention)

Table 29 shows the composition further comprising a boron-selective sorbent - Purolit^{®} S108.

**Table 29**

| Sorbent type | Trademark of the sorbent | Percent in the composition |
|---|---|---|
| Sorbent having cation-exchange properties | DOWEX IDA-1 | 50% |
| Sorbent having anion-exchange properties | DOWEX^{™} UPCORE MONO A2-500 | 10% |
| Iron- and manganese-selective sorbent | Indion ISR | 15% |
| Granular polymer material | PSM-115 | 10% |
| Granular filtering material | AquaQuartz | 10% |
| Boron-selective sorbent | Purolit^{®} S108 | 5% |

The study results are shown in Table 30 below.

**Table 30**

| Impurity | Concentration | | Degree of purification |
|---|---|---|---|
| | in source water | in purified water | |
| Hardness salts (Ca, Mg) | 5 mg-equ/l | 1 mg-equ/l | 80% |
| Total iron (Fe) | 1.75 mg/l | 0.25 mg/l | 85% |
| Manganese (Mn) | 0.95 mg/l | <0.05 mg/l | 95% |
| Chemical oxygen demand (COD) with permanganate as the oxidant | 2 mg-O₂/l | 1.5 mg-O₂/l | 25% |
| Copper (Cu) | 3,7 mg/l | 0.8 mg/l | 78% |
| Zinc (Zn) | 5 mg/l | 0.6 mg/l | 88% |
| Molybdenum (Mo) | 1.1 mg/l | 0.05 mg/l | 95% |
| Cadmium (Cd) | 0.013 mg/l | < 0.001 mg/l | 92% |
| Plumbum (Pb) | 0.12 mg/l | 0.005 mg/l | 96% |
| Chromium (Cr) | 3.2 mg/l | <0.05 mg/l | 98% |
| Boron (B) | 3.5 mg/l | 0.4 mg/l | 89% |
| Turbidity | 8 NTU | < 0.5 NTU | 94% |

### Example 16

Table 31 shows the sorption composition comprising a cadmium- and mercury-selective sorbent.

**Table 31**

| Sorbent type | Trademark of the sorbent | Percent in the composition |
|---|---|---|
| Sorbent having cation-exchange properties | AMBERLITE^{™} IRC86 | 40% |
| Sorbent having anion-exchange properties | AMBERLITE^{™} IRA900 | 15% |
| Iron- and manganese-selective sorbent | ion-exchanger with dimethylethanolamine strong-base functional groups, modified with 2', 4', 5', 7'-tet rabrom ofluorescein | 5% |
| Granular polymer material | PSM-115 | 3% |
| Granular filtering material | Foshan Huatai Super White Quartz Sand | 3% |
| Cadmium- and mercury-selective sorbent | MERSORB^{®} | 34% |

The results of water purification are shown in Table 32 below.

**Table 32**

| Impurity | Concentration | | Degree of purification |
|---|---|---|---|
| | in source water | in purified water | |
| Hardness salts (Ca, Mg) | 9 mg-equ/l | 0.6 mg-equ/l | 93% |
| Total iron (Fe) | 4 mg/l | 0.08 mg/l | 98% |
| Manganese (Mn) | 1.2 mg/l | <0.05 mg/l | > 96% |
| Chemical oxygen demand (COD) with permanganate as the oxidant | 6 mg-O₂/l | 4 mg-O₂/l | 33% |
| Cadmium (Cd) | 0.11 mg/l | < 0.001 mg/l | > 99% |
| Mercury (Hg) | 0.01 mg/l | < 0.0005 mg/l | > 95% |
| Turbidity | 7 NTU | 0.5 NTU | 86% |

### Example 17 (not according to the invention)

Table 31 shows the sorption composition further comprising the perchlorate-selective sorbent DOWEX^{™} PSR-2 having anion-exchange properties. The results of water purification are shown in Table 34 below.

**Table 33**

| Sorbent type | Trademark of the sorbent | Percent in the composition |
|---|---|---|
| Sorbent having cation-exchange properties | AMBERLITE^{®} IRC747 | 50% |
| Sorbent having anion-exchange properties | AMBERLITE^{™} IRA67 | 2,5% |
| Iron- and manganese-selective sorbent | Indion ISR | 2,5% |
| Granular polymer material | PSM-115 | 5% |
| Granular filtering material | FilterAg+ | 5% |
| Perchlorate-selective sorbent | DOWEX^{™} PSR-2 | 35% |

**Table 34**

| Impurity | Concentration | | Degree of purification |
|---|---|---|---|
| | in source water | in purified water | |
| Hardness salts (Ca, Mg) | 7 mg-equ/l | 2 mg-equ/l | 71% |
| Total iron (Fe) | 1.2 mg/l | 0.2 mg/l | 83% |
| Manganese (Mn) | 0.1 mg/l | 0.05 mg/l | 50% |
| Chemical oxygen demand (COD) with permanganate as the oxidant | 12 mg-O₂/l | < 1 mg-O₂/l | > 92% |
| Copper (Cu) | 6 mg/l | 0.1 mg/l | 98% |
| Nickel (Ni) | 1.1 mg/l | 0.01 mg/l | 99% |
| Turbidity | 11 NTU | 0.5 NTU | 95% |
| Perchlorates (ClO₄⁻ ) | 0.12 mg/l | 0.004 mg/l | 97% |

### Example 18

Table 35 shows the sorption composition further comprising an affinity sorbent.

**Table 35**

| Sorbent type | Trademark of the sorbent | Percent in the composition |
|---|---|---|
| Sorbent having cation-exchange properties | AMBERLITE^{™} SR1 L | 40% |
| Sorbent having anion-exchange properties | D.E.R.^{™} 669E | 10% |
| Iron- and manganese-selective sorbent | ion-exchanger with dimethylamine weak-base functional groups, modified with (2R,3S)-2-(3,4-dihydroxyphenyl)-3,4-dihydro-2H-chromene-3,5,7-triol | 20% |
| Granular polymer material | PSM-115 | 5% |
| Granular filtering material | FilterAg | 5% |
| Affinity sorbent | Profinity IMAC | 20% |

The study results are shown in the table below.

**Table 36**

| Impurity | Concent rat ion | | Degree of purification |
|---|---|---|---|
| | in source water | in purified water | |
| Hardness salts (Ca, Mg) | 5 mg-equ/l | 0.5 mg-equ/l | 90% |
| Total iron (Fe) | 4,2 mg/l | 0.15 mg/l | 96% |
| Manganese (Mn) | 1.55 mg/l | <0.05 mg/l | > 97% |
| Chemical oxygen demand (COD) with permanganate as the oxidant | 13 mg-O₂/l | 4 mg-O₂/l | 69% |
| Cadmium (Cd) | 0.11 mg/l | < 0.001 mg/l | > 99% |
| Surface-active substances | 1.15 mg/l | 0.01 mg/l | > 99% |
| Benzapyrene | 0.12 mg/l | < 0.002 mg/l | 98% |
| Pesticides | 0.016 mg/l | < 0.0001 mg/l | 99% |
| Trihalomethanes | 80 mg/l | 8 mg/l | 90% |
| Turbidity | 11 NTU | 0.5 NTU | 95% |

### Example 19 (not according to the invention)

Table 37 shows the sorption composition further comprising an additional component - a pH-adjusting agent.

**Table 37**

| Sorbent type | Trademark of the sorbent | Percent in the com position |
|---|---|---|
| Sorbent having cation-exchange properties | IMAC^{™} HP333 | 60% |
| Sorbent having an ion- exchange properties | AMBERLITE^{™} IRA96 | 7% |
| Iron- and manganese-selective sorbent | DOWEX^{™} HCR S/S FF, modified with sodium 2,3-dihydroxy-5-({[(2R,3R,4S,5R,6R)-3,4,5,6-tetrakis({ 3,4-dihydroxy-5-[(3,4,5-trihydroxyphenyl)carbonyloxy] phenyl} carbonyloxy)oxan-2-yl]methoxy} carbonyl)phenyl-3,4,5-trihydroxybenzoate with an immobilized layer of iron compounds | sodium |
| Granular polymer material | PSM-115 | 5% |
| Granular filtering material | Centaur^{®} | 5% |
| pH-adjusting agent | Corosex^{®} | 8% |

The results are shown in the table below.

**Table 38**

| Impurity | Concentration | | Degree of purification |
|---|---|---|---|
| | in source water | in purified water | |
| Hardness salts (Ca, Mg) | 18 mg-equ/l | 0.5 mg-equ/l | 97% |
| Total iron (Fe) | 5,2 mg/l | <0.2 mg/l | 96% |
| Manganese (Mn) | 2,2 mg/l | <0.05 mg/l | 98% |
| Chemical oxygen demand (COD) with permanganate as | 17.5 mg-O₂/l | 2 mg-O₂/l | 89% |
| the oxidant | | | |
| pH | 5.8 | 7.9 | - |
| Arsenic | 0.15 mg/l | 0.001 mg/l | 99% |
| Hydrogen sulfide (H₂S) | 1.8 mg/l | < 0.01 mg/l | 99% |

Thus, the disclosed sorption composition for complex water purification is a mixture of five high-quality basic ion-exchange and adsorption materials of natural and artificial origin. All the said mixtures described in the Examples provide high-quality purified water, more efficient removal of impurities, such as various forms of iron, manganese, arsenic, organic compounds, etc., and a higher degree of water purification from hardness salts. Some mixtures provide a high degree of purification from iron to the level even less than 0.1 mg/l (see Examples 3, 5, and 7); all proposed mixtures remove manganese to a level less than 0.05 mg/l. Example 4 shows that the mixture applied provides a high degree of water purification from suspended substances. The mixture according to Example 6 provides good purification from heavy and non-ferrous metals, while the mixture according to Example 7 further shows a high degree of purification from iron and manganese. The mixture according to Example 8 demonstrates a high degree of purification from non-ferrous metals and perchlorates. The mixtures according to Examples 2, 3, 9 and 10 also show a high degree of purification from organic impurities.

Hydrophilicity of GM was determined by thermal effects of wetting with polar (H2O) and non-polar (C6H6) solvents. For this purpose, GM was pre-dried to a constant mass at 60 ° C. After that, thermal effects of wetting with water and benzene in an isothermal calorimeter with a stirrer were determined. Measurements were carried out with a high-precision Beckmann thermometer, accurate to 0.01 ° C. Water wetting / benzene wetting thermal effects' ratio characterizes the affinity for one of the solvents and, in this case, is the hydrophilicity coefficient.

The following tables show the results of water purification using single components of the mixtures used as well as some combinations of two thereof.

Table 39 shows the results of water purification with single-component mixtures consisting of cation-exchangers of the different trademarks.

**Table 39**

| Nº of the mixtur e | Trademark of the sorbent | Degree of purification by separate components, % | | | | |
|---|---|---|---|---|---|---|
| | | hardness | Iron (II) | Iron (III) | mangane se | Organ ic substances |
| 1 | IMAC^{™} HP333 | 90 | 80 | 68 | 30 | 0 |
| 2 | DOWEX^{™} HCR S/S FF | 85 | 83 | 66 | 39 | 0 |
| 3 | Purolite^{®} C150 | 95 | 85 | 70 | 40 | 0 |
| 4 | DOWEX IDA-1 | 85 | 84 | 69 | 36 | 0 |
| 5 | AMBERLITE^{™} IRC86 | 92 | 80 | 65 | 32 | 0 |
| 6 | AMBERLITE^{®} IRC747 | 89 | 84 | 66 | 35 | 0 |
| 7 | AMBERLITE^{™} SR1L | 87 | 81 | 67 | 38 | 0 |

Table 40 shows the results of water purification with two-component mixtures consisting of cation-exchangers and anion-exchangers of the different trademarks. Cation-exchangers' content in the mixtures prevailed and made 80%, anion-exchangers made 20%.

**Table 40**

| Nº of the mixtu re | Trademark of the sorbent | Degree of purification by separate components, % | | | | |
|---|---|---|---|---|---|---|
| | | hardness | Iron (II) | Iron (III) | manga nese | Organ ic substances |
| 1 | Cation-exchanger IMAC^{™} HP333; | 95 | 85 | 70 | 40 | 60 |
| 2 | anion-exchanger Dowex Marathon A | 94 | 85 | 70 | 40 | 60 |
| 3 | Cation-exchanger DOWEX^{™} HCR S/S FF; anion-exchanger Dowex Marathon A | 85 | 80 | 65 | 30 | 55 |
| 4 | Cation-exchanger Purolite^{®} C150; anion-exchanger DOWEX^{™} UPCORE MONO A2-500 | 90 | 82 | 66 | 35 | 57 |
| 5 | Cation-exchanger DOWEX IDA-1 ; anion-exchanger D.E.R.^{™} 669E | 87 | 84 | 69 | 38 | 59 |
| 6 | Cation-exchanger AMBERLITE^{®} IRC747; an ion- exchanger Lewatit^{®} A 365 | 86 | 80 | 68 | 32 | 51 |
| 7 | Cation-exchanger AMBERLITE^{™} SR1L; anion-exchanger Purofine^{®} PFA860 | 92 | 81 | 65 | 36 | 50 |

Table 41 shows the results of water purification with two-component mixtures consisting of cation-exchangers of the different trademarks and selective iron- and manganese sorbents. Content of cation-exchangers in mixtures prevailed and made 80%, iron and manganese-selective sorbents made 20%.

**Table 41**

| Nº of the mixture | Trademark of the sorbent | Degree of purification by separate components, % | | | | |
|---|---|---|---|---|---|---|
| | | hardness | Iron (II) | Iron (III) | manganese | Organic substances |
| 1 | Cation-exchanger IMAC^{™} HP333; | 95 | 85 | 85 | 90 | 0 |
| 2 | Fe/Mn selective sorbent Indion ISR | 93 | 90 | 85 | 95 | 0 |
| 3 | Cation-exchanger Purolite^{®} C150; Fe/Mn selective sorbent ion-exchanger with trimethylamine strong-base functional groups, modified with4-phenylcumarin | 85 | 90 | 95 | 85 | 0 |
| 4 | Cation - exchanger DOWEX IDA-1 ; Fe/Mn selective sorbent Indion ISR | 85 | 93 | 90 | 95 | 0 |
| 5 | Cation-exchanger AMBERLITE^{™} IRC86; Fe/Mn selective sorbent xGnp-C-750 | 90 | 95 | 90 | 95 | 0 |
| 6 | Cation-exchanger AMBERLITE^{®} IRC747; Fe/Mn selective sorbent ion-exchanger with dimethylamine strong-base functional groups, modified with(2R,3S)-2-(3,4-dihydroxyphenyl)-3,4-dihydro-2H-chromene-3,5,7-triol | 86 | 95 | 90 | 85 | 0 |
| 7 | Cation-exchanger AMBERLITE^{™} SR1L; Fe/Mn selective sorbent DOWEX^{™} HCR S/S FF, modified with2,3-dihydroxy-5-({[(2R,3R,4S,5R,6R)-3,4,5,6-tetrakis({3,4-dihydroxy-5-[(3,4,5-trihydroxyphenyl)carb onyloxy]phenyl} carbo nyloxy)oxane-2-i 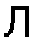 ] methoxy}carbonyl) phenyl-3,4,5-sodium trihydroxy benzoate with immobilized layer of iron compounds | 90 | 93 | 95 | 85 | 0 |

Table 42 shows the results of water purification with two-component mixtures consisting of cation-exchangers of the different trademarks and granular polymer materials. Content of cation-exchangers in the mixtures prevailed and made 80%, granular polymeric materials made 20%.

**Table 42**

| Nº of the mixtu re | Trademark of the sorbent | Degree of purification by separate components, % | | | | |
|---|---|---|---|---|---|---|
| | | Hardness | Iron (II) | Iron (III) | Mangane se | Organic substance s |
| 1 | Cation-exchanger IMAC^{™} HP333; granular polymer material PSM-118 | 90 | 80 | 70 | 30 | 0 |
| 2 | Cation-exchanger DOWEX^{™} HCR S/S FF; granular polymer material PSM-118 | 85 | 83 | 73 | 39 | 0 |
| 3 | Cation-exchanger Purolite^{®} C150; granular polymer material PSM-115 | 95 | 85 | 70 | 40 | 0 |
| 4 | Cation-exchanger DOWEX IDA-1; granular polymer material PSM-115 | 85 | 84 | 74 | 36 | 0 |
| 5 | Cation-exchanger AMBERLITE^{™} IRC86; granular polymer material PSM-115 | 92 | 80 | 74 | 32 | 0 |
| 6 | Cation-exchanger AMBERLITE^{®} IRC747; granular polymer material PSM-115 | 89 | 84 | 70 | 35 | 0 |
| 7 | Cation-exchanger AMBERLITE^{™} SR1L; granular polymer material PSM-115 | 87 | 81 | 73 | 38 | 0 |

Table 43 shows the results of water purification with two-component mixtures consisting of cation-exchangers of the different trademarks and granulated filter materials. Content of the cation-exchangers in the mixtures made 80%, granulated filtering materials made 20%.

**Table 43**

| Nº of the mixtur e | Trademark of the sorbent | Degree of purification by separate components, % | | | | |
|---|---|---|---|---|---|---|
| | | hardness | Iron (II) | Iron (III) | mangane se | Organic substanc es |
| 1 | Cation-exchanger IMAC^{™} HP333; granular filtering material Centaur^{®} | 90 | 80 | 70 | 30 | 0 |
| 2 | Cation-exchanger DOWEX^{™} HCR S/S FF; granular filtering material FilterAg+ | 85 | 83 | 73 | 39 | 0 |
| 3 | Cation-exchanger Purolite^{®} C150; granular filtering material AquaQuartz | 95 | 85 | 70 | 40 | 0 |
| 4 | Cation - exchanger DOWEX IDA-1 ; granular filtering material AquaQuartz | 85 | 84 | 74 | 36 | 0 |
| 5 | Cation-exchanger AMBERLITE^{™} IRC86; granular filtering material AquaQuartz | 92 | 80 | 74 | 32 | 0 |
| 6 | Cation-exchanger AMBERLITE^{®} IRC747; granular filtering material FilterAg+ | 89 | 84 | 70 | 35 | 0 |
| 7 | Cation-exchanger AMBERLITE^{™} SR1L; granular filtering material Foshan Huatai Super White Quartz Sand | 87 | 81 | 73 | 38 | 0 |

Table 44 shows the results of water purification with single-component mixtures consisting of anion-exchangers of the different trademarks.

**Table 44**

| Nº of the mixtur e | Trademark of the sorbent | Degree of purification by separate components, % | | | | |
|---|---|---|---|---|---|---|
| | | hardness | Iron (II) | Iron (III) | mangane se | Organic substances |
| 1 | Dowex Marathon A | 0 | 10 | 70 | 6 | 60 |
| 2 | Purofine^{®} PFA860 | 0 | 5 | 65 | 10 | 50 |
| 3 | Lewatit^{®} A 365 | 0 | 6 | 70 | 7 | 55 |
| 4 | DOWEX^{™} UPCORE MONO A2-500 | 0 | 9 | 68 | 10 | 56 |
| 5 | AMBERLITE^{™} IRA900 | 0 | 6 | 70 | 8 | 59 |
| 6 | D.E.R.^{™} 669E | 0 | 5 | 65 | 10 | 53 |
| 7 | AMBERLITE^{™} IRA96 | 0 | 8 | 70 | 5 | 55 |
| 8 | AMBERLITE^{™} IRA67 | 0 | 9 | 65 | 8 | 50 |

Table 45 shows the results of water purification with two-component mixtures consisting of anion-exchangers of the different trademarks (50%) and selective iron- and manganese sorbents (50%).

**Table 45**

| Nº of the mixtu re | Trademark of the sorbent | Degree of purification by separate components, % | | | | |
|---|---|---|---|---|---|---|
| | | hardness | Iron (II) | Iron (III) | mangan ese | Organ ic substanc es |
| 1 | Anion-exchanger Dowex Marathon A; | | | | | 1 |
| 2 | Anion-exchanger Purofine^{®} PFA860; Fe/Mn selective sorbent ion-exchanger with dimethylethanolamine strong-base functional groups, modified with 2',4',5',7'-tet rabrom ofluorescein | 0 | 85 | 85 | 80 | 50 |
| 3 | Anion-exchanger Lewatit^{®} A 365; Fe/Mn selective sorbent ion-exchanger with trimethylamine strong-base functional groups, modified with 4-phenylcumarin | 0 | 90 | 90 | 85 | 55 |
| 4 | Anion-exchanger DOWEX^{™} UPCORE MONO A2-500; Fe/Mn selective sorbent Indion ISR | 0 | 90 | 90 | 80 | 56 |
| 5 | Anion-exchanger DOWEX ^{™} IRA900; Fe/Mn selective sorbent xGnp-C-750 | 0 | 94 | 93 | 83 | 59 |
| 6 | AHioiHT D.E.R.^{™} 669E; Fe/Mn selective sorbent ion-exchanger with dimethylamine weak-base functional groups, modified with (2R,3S)-2-(3,4-dihydroxyphenyl)-3,4-dihydro-2H-chromene-3,5,7-triol | 0 | 85 | 85 | 80 | 53 |
| 7 | Anion-exchanger AMBERLITE^{™} IRA96; Fe/Mn selective sorbent DOWEX^{™} HCR S/S FF, modified with2,3-dihydroxy-5-({ [(2R,3R,4S,5R,6R)-3,4,5,6-tetrakis({ 3,4-dihydroxy- 5-[(3,4,5-trihydroxyphenyl) carbonyloxy] phenyl} carbonyloxy)oxa ne-2-i 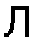 ]methoxy}carbonyl)ph enyl-3,4,5- sodium trihydroxybenzoate with an immobilized layer of iron compounds | 0 | 87 | 90 | 85 | 60 |
| 8 | Anion-exchanger AMBERLITE^{™} IRA67; Fe/Mn selective sorbent Indion ISR | 0 | 95 | 95 | 85 | 60 |

Table 46 shows the results of water purification with two-component mixtures consisting of anion-exchangers of the different trademarks (80%) and granular polymer material (20%).

**Table 46**

| Nº of the mixtu re | Trademark of the sorbent | Degree of purification by separate components, % | | | | |
|---|---|---|---|---|---|---|
| | | hardness | Iron (II) | Iron (III) | mangan ese | Organ ic substanc es |
| 1 | Anion-exchanger Dowex Marathon A; granular polymer material PSM-115 | 0 | 10 | 70 | 10 | 60 |
| 2 | Anion-exchanger Purofine^{®} PFA860; granular polymer material PSM-115 | 0 | 5 | 65 | 5 | 50 |
| 3 | Anion-exchanger Lewatit^{®} A 365; granular polymer material PSM-115 | 0 | 8 | 60 | 7 | 55 |
| 4 | Anion-exchanger DOWEX^{™} UPCORE MONO A2-500; granular polymer material PSM-115 | 0 | 10 | 60 | 8 | 56 |
| 5 | Anion-exchanger AMBERLITE^{™} IRA900; granular polymer material PSM-115 | 0 | 9 | 70 | 10 | 59 |
| 6 | AHioiHT D.E.R.^{™} 669E; granular polymer material PSM-115 | 0 | 5 | 65 | 8 | 53 |
| 7 | Anion-exchanger AMBERLITE^{™} IRA96; granular polymer material PSM-115 | 0 | 6 | 70 | 5 | 60 |
| 8 | Anion-exchanger AMBERLITE^{™} IRA67 ; granular polymer material PSM-115 | 0 | 7 | 60 | 8 | 60 |

Table 47 shows the results of water purification with two-component mixtures consisting of anion-exchangers of the different trademarks (80%) and granular filtering material (20%).

**Table 47**

| Nº of the mixtu re | Trademark of the sorbent | Degree of purification by separate components, % | | | | |
|---|---|---|---|---|---|---|
| | | hardness | Iron (II) | Iron (III) | mangan ese | Organic substanc es |
| 1 | Anion-exchanger Dowex Marathon A; granular filtering material Foshan Huatai Super White Quartz Sand | 0 | 10 | 70 | 10 | 60 |
| 2 | Anion-exchanger Purofine^{®} PFA860; granular filtering material AquaQuartz | 0 | 5 | 64 | 6 | 52 |
| 3 | Anion-exchanger Lewatit^{®} A 365; granular filtering material Keramzit M800 | 0 | 8 | 65 | 7 | 55 |
| 4 | Anion-exchanger DOWEX^{™} UPCORE MONO A2-500; granular filtering material AquaQuartz | 0 | 10 | 65 | 8 | 56 |
| 5 | Anion-exchanger AMBERLITE^{™} IRA900; granular filtering material AquaQuartz | 0 | 9 | 70 | 10 | 58 |
| 6 | Anion-exchanger D.E.R.^{™} 669E; granular filtering material FilterAg+ | 0 | 5 | 65 | 8 | 52 |
| 7 | Anion-exchanger AMBERLITE^{™} IRA96; granular filtering material Centaur^{®} | 0 | 6 | 70 | 5 | 60 |
| 8 | Anion-exchanger AMBERLITE^{™} IRA67 ; granular filtering material FilterAg+ | 0 | 7 | 60 | 10 | 60 |

Table 48 shows the results of water purification with two-component mixtures consisting of selective iron- and manganese sorbents (50%) and granular polymer material (50%).

**Table 48**

| Nº of the mixtu re | Trademark of the sorbent | Degree of purification by separate components, % | | | | |
|---|---|---|---|---|---|---|
| | | hardness | Iron (II) | Iron (III) | mangan ese | Organic substan ces |
| 1 | Fe/Mn selective sorbent Indion ISR; granular polymer material PSM-118 | 20 | 95 | 95 | 85 | 60 |
| 2 | Fe/Mn selective sorbent ion-exchanger with dim ethylethanolamine strong-base functional groups, modified with 2',4',5',7'-tet rabrom ofluorescein; granular polymer material PSM-115 | 10 | 85 | 85 | 80 | 50 |
| 3 | Fe/Mn selective sorbent ion-exchanger with trimethylamine strong-base functional groups, modified with4-phenylcumarin; granular polymer material PSM-118 | 15 | 90 | 90 | 85 | 55 |
| 4 | Fe/Mn selective sorbent Indion ISR; granular polymer material PSM-115 | 18 | 90 | 90 | 80 | 56 |
| 5 | Fe/Mn selective sorbent xGnp-C-750; granular polymer material PSM-115 | 20 | 96 | 93 | 83 | 59 |
| 6 | Fe/Mn selective sorbent ion-exchanger with dimethylamine weak-base functional groups, modified with(2R,3S)-2-(3,4-dihydroxyphenyl)-3,4-dihydro-2H-chromene-3,5,7-triol; granular polymer material PSM-115 | 10 | 85 | 85 | 80 | 53 |
| 7 | Fe/Mn selective sorbent DOWEX^{™} HCR S/S FF, modified with 2,3-dihydroxy-5-({ [(2R,3R,4S,5R,6R)-3,4,5,6-tetrakis({ 3,4-dihydroxy-5-[(3,4,5-trihydroxyphenyl) carbonyloxy] phenyl} carbonyloxy)oxa ne-2- | 15 | 85 | 90 | 85 | 60 |
| | yl]methoxy}carbonyl)phenyl-3,4,5-trihydroxybenzoate with an immobilized layer of iron compounds; granular polymer material PSM -115 | | | | | |
| 8 | Fe/Mn selective sorbent Indion ISR; granular polymer material PSM-115 | 15 | 95 | 95 | 85 | 60 |

Table 49 shows the results of water purification with two-component mixtures consisting of selective iron- and manganese sorbents (50% ) and granular filtering material (50%).

**Table 49**

| Nº of the mixture | Trademark of the sorbent | Degree of purification by separate components, % | | | | |
|---|---|---|---|---|---|---|
| | | hardness | Iron (II) | Iron (III) | manganese | Organic substances |
| 1 | Fe/Mn selective sorbent Indion ISR; granular filtering material AquaQuartz | 10 | 95 | 95 | 85 | 0 |
| 2 | Fe/Mn selective sorbent ion-exchanger with dim ethylethanolamine strong-base functional groups, modified with2',4',5',7'-tetrabromo fluoricsein; granular filtering material AquaQuartz | 5 | 85 | 85 | 80 | 0 |
| 3 | Fe/Mn selective sorbent ion-exchanger with trimethylamine strong-base functional groups, modified with 4-phenylcumarin; granular filtering material Keramzit M800 | 0 | 90 | 90 | 85 | 0 |
| 4 | Fe/Mn selective sorbent Indion ISR; granular polymer material filtering material AquaQuartz | 8 | 90 | 90 | 80 | 0 |
| 5 | Fe/Mn selective sorbent xGnp-C-750; granular filtering material Foshan Huatai Super White Quartz Sand | 5 | 94 | 93 | 83 | 0 |
| 6 | Fe/Mn selective sorbent ion-exchanger with dim ethylethanolamine weak-base functional groups, modified with (2R,3S)-2-(3,4-dihydroxyphenyl)-3,4-dihydro-2H-chromene-3,5,7-triol; granular filtering material FilterAg+ | 8 | 85 | 85 | 80 | 0 |
| 7 | Fe/Mn selective sorbent DOWEX^{™} HCR S/S FF, modified with2,3-dihydroxy-5-({ [(2R,3R,4S,5R,6R)-3,4,5,6-tetrakis({ 3,4-dihydroxy- 5-[(3,4,5-trihydroxyphenyl) carbonyloxy] phenyl} carbonyloxy)oxa ne-2- | 10 | 87 | 90 | 85 | 0 |
| | yl]methoxy}carbonyl)phenyl-3,4,5-trihydroxybenzoate with an immobilized layer of iron compounds; granular filtering material FilterAg+ | | | | | |
| 8 | Fe/Mn selective sorbent Indion ISR; granular filtering material Centaur^{®} | 10 | 95 | 95 | 85 | 60 |

Table 50 shows the results of water purification with single-component mixtures consisting of granular polymer material of the different trademarks.

**Table 50**

| Nº of the mixtur e | Trademark of the sorbent | Degree of purification by separate components, % | | | | |
|---|---|---|---|---|---|---|
| | | Hardness | Iron (II) | Iron (III) | Mangane se | Organ ic substance s |
| 1 | Granular polymer material PSM-115 | 0 | 0 | 20 | 0 | 0 |
| 2 | Granular polymer material PSM-118; | 0 | 0 | 30 | 0 | 0 |

Table 51 shows the results of water purification with single-component mixtures consisting of granular filtering material of the different trademarks.

**Table 51**

| Nº of the mixtu re | Trademark of the sorbent | Degree of purification by separate components, % | | | | |
|---|---|---|---|---|---|---|
| | | Hardness | Iron (II) | Iron (III) | Mangane se | Organ ic substances |
| 1 | Granular filtering material Foshan Huatai Super White Quartz Sand | 0 | 0 | 60 | 0 | 0 |
| 2 | Granular filtering material Keramzit M800 | 0 | 0 | 50 | 0 | 0 |
| 3 | Granular filtering material AquaQuartz | 0 | 0 | 55 | 0 | 0 |
| 4 | Granular filtering material FilterAg+ | 0 | 0 | 55 | 0 | 0 |
| 5 | Granular filtering material Centaur^{®} | 0 | 6 | 60 | 0 | 0 |

Table 52 shows the results of water purification with two-component mixtures consisting of granular polymer material of the different trademarks (50% ) and granular filtering material (50%).

**Table 52**

| Nº of the mixture | Trademark of the sorbent | Degree of purification by separate components, % | | | | |
|---|---|---|---|---|---|---|
| | | Hardness | Iron (II) | Iron (III) | Mangane se | Organic substanc es |
| 1 | Granular polymer material PSM-115; granular filtering material Foshan Huatai Super White Quartz Sand | 0 | 0 | 60 | 0 | 00 |
| 2 | Granular polymer material PSM-118; granular filtering material Keramzit M800 | 0 | 0 | 50 | 0 | 0 |
| 3 | Granular polymer material PSM-115; granular filtering material AquaQuartz | 0 | 0 | 55 | 0 | 0 |
| 4 | Granular polymer material PSM-118; granular filtering material FilterAg+ | 0 | 0 | 55 | 0 | 0 |
| 5 | Granular polymer material PSM-115; granular filtering material Centaur^{®} | 0 | 6 | 60 | 0 | 0 |

Below is a comparative table showing the degree of water purification with individual components (averaged values) compared to the degree of purification with the five-component mixture according to the invention. This table indicates that the claimed mixture is capable to remove ions of hardness, iron and manganese from the artesian water. to a level that complies with the standards of drinking water. The comparative table clearly demonstrates synergy of the claimed composition.

| Table **53** | | | | | | | | | | | | | | | | |
|---|---|---|---|---|---|---|---|---|---|---|---|---|---|---|---|---|
| Approximate composition of the mixture, % | | | | | | | | | | | | | | | | |
| Cation-exchanger | 100 | | | | | 80 | 80 | 80 | 80 | | | | | | | Mixture of the invention |
| Anion-exchanger | | 100 | | | | 20 | | | | 50 | 80 | 80 | | | | |
| Fe/Mn-selective sorbent | | | 100 | | | | 20 | | | 50 | | | 50 | 50 | | |
| Granular polymer material | | | | 100 | | | | 20 | | | 20 | | 50 | | 50 | |
| Granular filtering material | | | | | 100 | | | | 20 | | | 20 | | 50 | 50 | |

| Degree of purification by separate components, % | | | | | | | | | | | | | | | | |
|---|---|---|---|---|---|---|---|---|---|---|---|---|---|---|---|---|
| Hardness | 86-95 | 0 | 10-20 | 0 | 0 | 85-95 | 85-95 | 85-95 | 85-95 | 0 | 0 | 0 | 10-20 | 0-10 | 0 | 90-95 |
| Iron (II) | 80-85 | 5-10 | 85-95 | 0 | 0 | 80-85 | 85-95 | 89-85 | 80-85 | 85-95 | 5-10 | 5-10 | 85-95 | 85-95 | 0 | 90-99 |
| Iron (III) | 65-70 | 65-70 | 85-95 | 20-30 | 50-60 | 65-70 | 85-95 | 70-75 | 80-85 | 85-95 | 60-70 | 60-70 | 90-95 | 90-95 | 50-60 | 90-95 |
| Manganese | 30-40 | 5-10 | 90-95 | 0 | 0 | 30-40 | 85-95 | 30-40 | 30-40 | 80-85 | 5-10 | 5-10 | 90-95 | 90-95 | 0 | 90-95 |
| Organic substances | 0 | 50-60 | 0 | 0 | 0 | 50-60 | 0 | 0 | 0 | 50-60 | 50-60 | 50-60 | 0 | 0 | 0 | 75-90 |
| Operating characteristics Reduction of adsorption capacity in 20 sorption-regeneration cycles,% | 20 | 6 | 7 | - | - | 17 | 8 | 20 | 20 | 3 | 6 | 6 | 6 | 6 | - | <1 |

Thus, the production of the complex sorption-filtering composition which, comprising a variety of specific sorption-filtering purifying components which characteristics may substantially vary, in particular by percentage ratios in a mixture, particle size, density and particle hydrophilicity factor, allows to purify water from various contaminants in an efficient manner. It was experimentally proved that the new features of the invention, specifically the optimal quantitative ratio of the components having certain selected characteristics, allows to achieve a synergistic effect when components are mixed in a mixture through which water flows.

The present invention is based on studies showing that the components known in the art and used for sorption, in particular ion-exchange resins, exhibit a synergistic effect when applied in a particular combination and with certain characteristics.

## Claims

1. A sorption composition for water purification comprising a sorbent having cation-exchange properties, a sorbent having anion-exchange properties, an iron- and/or manganese-selective sorbent, a granular polymer material, a granular filtering material with the following volumetric ratio of the components:
the sorbent having cation-exchange properties present at least at 40 % by volume;
the sorbent having anion-exchange properties present at 1-15 % by volume;
the iron- and/or manganese-selective sorbent present at 1-15 % by volume;
the granular polymer material present at 3-15% by volume;
the granular filtering material present at 3-15% by volume;
the said components have the following density:
the sorbent having cation-exchange properties - 1.15-1.35 g/cm³;
the sorbent having anion-exchange properties - 1.02-1.1 g/cm³;
the iron- and/or manganese-selective sorbent - 1.02-1.2 g/cm³;
the granular polymer material - less than 1 g/cm³;
density of the granular filtering material is greater than that of any other component;
the said components have the following surface hydrophilicity factors:
the sorbent having cation-exchange properties - >3 kJ/kJ;
the sorbent having anion-exchange properties - 0.2-0.6 kJ/kJ;
the iron- and/or
manganese-selective sorbent - 1.05-3.5 kJ/kJ;
the granular polymer material - ≤1 kJ/kJ;
the granular filtering material - >1 kJ/kJ;
wherein an iron- and/or manganese-selective sorbent has the structure of M-R₁-R₂-R₃,
wherein M-R₁ is an ion-exchanger having a polymer matrix M and R₁ functional groups,
R₂-R₃ is a modifier,
wherein R₂ group is functionally linked to R₁ ion-exchanger group,
R₃ group lies on the surface of the sorbent, and
R₁ is dimethylamine weak-base, trimethylamine strong-base, dimethylethanolamine strong-base, aminophosphonic, carboxylic, sulfonic or (2R,3R,4R,5S)-6-(methylamino)hexane-1,2,3,4,5-pentoleic functional groups;
the modifier R₂-R₃ is selected from the group consisting of 2,3-dihydroxy-5-({[(2R,3R,4S,5R,6R)-3,4,5,6-tetrakis({3,4-dihydroxy-5-[(3,4,5-trihydroxyphenyl)carbonyloxy]phenyl}carbonyloxy)oxan-2-yl]methoxy}carbonyl)phenyl-3,4,5-trihydroxybenzoate; 3,4,5-trihydroxybenzoic acid; (2R,3S)-2-(3,4-dihydroxyphenyl)-3,4-dihydro-2H-chromene-3,5,7-triol; 3-phenyl-chromene-4-one; 4-phenylcoumarin; 2', 4', 5', 7'-tetrabromofluorescein; bis[N,N-bis(carboxymethyl)aminomethyl]fluorescein; (2S,3S,4S,5R,6S)-3,4,5-trihydroxy-6-(8-hydroxy-9-oxo-9H-xanthene-2-yloxy)-tetrahydro-pyran-2-carboxylic acid; a disodium salt of 2-amino-5-[(Z)-(4-amino-3-sulfonatophenyl)(4-imino-3-sulfonate-2,5-cyclohexadien-1-ylidene)methyl]-3-methylbenzenesulfonate; 2,7-dimethylacridine-3,6-diamine; bis[4-(dimethylamino)phenyl] methanaminium chloride; 7,11b-dihydroindeno[2,1-c]chromene-3,4,6a,9,10(6H)-pentol; a disodium salt of 4-amino-3-[4-[4-(1-amino-4-sulfonato-naphthalen-2-yl)diazenylphenyl]phenyl]diazenyl-naphthalene-1-sulfonate; tris(4-(dimethylamino)phenyl)methylium chloride; 3-[4-(dimethylamino)phenyl] prop-2-enal; ethyl-[4-[[4-[ethyl-[(3-sulfophenyl)methyl]amino]phenyl methylidene]-1-cyclohexa-2,5-dienylidene]-[(3-sulfophenyl)methyl]azanium]-(4-hydroxy-2-sulfophenyl)) or a mixture of any of these components either produced naturally or artificially in any ratio whatsoever.

2. The sorption composition for water purification of claim 1 wherein the components have the following granule size:
the sorbent having cation-exchange properties - 0.3-1.2 mm;
the sorbent having anion-exchange properties- 0.3-1.2 mm;
the iron- and/or manganese-selective sorbent- 0.3-1.2 mm;
the granular polymer material - 2.5-4 mm;
the granular filtering material - 2-5 mm.

3. The sorption composition of claim 1-2, wherein the polymer matrix of the ion-exchanger M has a gel structure, preferably a macroporous structure.

4. The sorption composition of any of claims 1-3, wherein the matrix is formed by copolymerization of styrene and divinylbenzene or copolymerization of derivatives of acrylic acid and divinylbenzene.

5. The sorption composition of any of the previous claims 1-4, wherein a sorbent having cation-exchange properties is selected from the group consisting of a styrene-divinylbenzene cation-exchanger having a gel or macroporous structure and comprising strong-acid functional groups, an acryl-divinylbenzene cation-exchanger having a gel or macroporous structure and comprising weak-acid functional groups, a styrene-divinylbenzene cation-exchanger having macroporous structure and comprising aminomethylphosphonium groups, and a styrene-divinylbenzene cation-exchanger having a macroporous structure and comprising iminodiacetate groups.

6. The sorption composition of any of the previous claims 1-5, wherein a sorbent having anion-exchange properties is selected from the group consisting of a styrene-divinylbenzene anion-exchanger having a gel or macroporous structure and comprising trimethylamine functional groups, a styrene-divinylbenzene anion-exchanger having a gel or macroporous structure and comprising dimethylethanolamine functional groups, a styrene-divinylbenzene anion-exchanger having a gel or macroporous structure and comprising dimethylamine functional groups, a phenol-formaldehyde anion-exchanger having a macroporous structure and comprising weak-base functional groups, and an acryl- or methacryl-divinylbenzene anion-exchanger having a gel or macroporous structure and comprising trimethylamine or dimethylamine functional groups.

7. The sorption composition of any of the previous claims 1-6, wherein granular polymer material is a polymer wherein a monomer unit contains ethylene, oxymethylene, propylene, ethylene terephthalate, vinyl chloride, vinylidene chloride, styrene, aryl sulfone, or is a copolymer of these monomer units.

8. The sorption composition of any of the previous claims 1-7, wherein a granular filtering material is selected from the group comprising anthracite, quartz sand, gravel, dolomite, almandine, silicon, aluminosilicate, borosilicate, activated carbon, catalytic activated carbon, zeolite, shungite, pyrolusite, clay pellets.

## Patentansprüche

1. Sorptionszusammensetzung zur Wasserreinigung, ein Sorbens umfassend, das Kationenaustauscheigenschaften aufweist, ein Sorbens, das Anionenaustauscheigenschaften aufweist, ein eisen- und/oder manganselektives Sorbens, ein gekörntes Polymermaterial, ein gekörntes Filtermaterial mit dem folgenden Volumenverhältnis der Komponenten umfassend:
das Sorbens mit Kationenaustauscheigenschaften ist zu mindestens 40 Vol.-% vorhanden,
das Sorbens mit Anionenaustauscheigenschaften ist zu 1 bis 15 Vol.-% vorhanden,
das eisen- und/oder manganselektive Sorbens ist zu 1 bis 15 Vol.-% vorhanden,
das gekörnte Polymermaterial ist zu 3 bis 15 Vol.-% vorhanden,
das gekörnte Filtermaterial ist zu 3 bis 15 Vol.-% vorhanden,
die genannten Komponenten weisen die folgende Dichte auf:
das Sorbens mit Kationenaustauscheigenschaften - 1,15 bis 1,35 g/cm³,
das Sorbens mit Anionenaustauscheigenschaften - 1,02 bis 1,1 g/cm³,
das eisen- und/oder manganselektive Sorbens - 1,02 bis 1,2 g/cm³,
das gekörnte Polymermaterial - weniger als 1 g/cm³,
die Dichte des gekörnten Filtermaterials ist größer als die aller anderen Komponenten,
die Komponenten weisen die folgenden Oberflächenhydrophilitätsfaktoren auf:
das Sorbens mit Kationenaustauscheigenschaften - >3 kJ/kJ,
das Sorbens mit Anionenaustauscheigenschaften - 0,2 bis 0,6 kJ/kJ,
das eisen- und/oder manganselektive Sorbens - 1,05 bis 3,5 kJ/kJ,
das gekörnte Polymermaterial - ≤1 kJ/kJ,
das gekörnte Filtermaterial - >1 kJ/kJ,
wobei ein eisen- und/oder manganselektives Sorbens eine Struktur von M-R₁-R₂-R₃ aufweist,
wobei M-R₁ ein Ionen-Austauscher mit einer Polymermatrix M und funktionalen Gruppen R₁ ist,
R₂-R₃ ein Modifikator ist,
wobei die R₂-Gruppe funktional mit der R₁-Ionen-Austauschergruppe verknüpft ist,
die R₃-Gruppe auf der Oberfläche des Sorbens liegt und
R₁ eine schwache Dimethylaminbase, eine starke Trimethylaminbase, eine starke Dimethylethanolaminbase, funktionale Aminophosphonsäure-, Carbonsäure-, Sulfonsäure- oder (2R,3R,4R,5S)-6-(Methylamino)hexan-1,2,3,4,5-pentolein-Gruppen,
der Modifikator R₂-R₃ aus der Gruppe ausgewählt ist, die besteht aus 2,3-Dihydroxy-5-({[(2R,3R,4S,5R,6R)-3,4,5,6-tetrakis({3,4-dihydroxy-5-[(3,4,5-trihydroxyphenyl)carbonyloxy]phenyl}carbonyloxy)oxan-2-yl]methoxy}carbonyl)phenyl-3,4,5-trihydroxybenzoat; 3,4,5-Trihydroxybenzoesäure; (2R,3S)-2-(3,4-Dihydroxyphenyl)-3,4-dihydro-2H-chromen-3,5,7-triol; 3-Phenyl-chromen-4-on; 4-Phenylcoumarin; 2', 4', 5', 7'-Tetrabromfluorescein; bis[N,N-bis(Carboxymethyl)aminomethyl]fluorescein; (2S,3S,4S,5R,6S)-3,4,5-Trihydroxy-6-(8-hydroxy-9-oxo-9H-xanthen-2-yloxy)-tetrahydro-pyran-2-carbonsäure; ein Dinatriumsalz von 2-Amino-5-[(Z)-(4-amino-3-sulfonatophenyl)(4-imino-3-sulfonat-2,5-cyclohexadien-1-ylidenmethyl]-3-methylbenzensulfonat; 2,7-Dimethylacridin-3,6-diamin; bis[4-(Dimethylamino)phenyl]methanaminiumchlorid; 7,11b-Dihydroindeno[2,1-c]chromen-3,4,6a,9,10(6H)-pentol; ein Dinatriumsalz von 4-Amino-3-[4-[4-(1-amino-4-sulfonato-naphthalen-2-yl)diazenylphenyl]phenyl]diazenyl-naphthalen-1-sulfonat; Tris(4-(dimethylamino)phenyl)methyliumchlorid; 3-[4-(Dimethylamino)phenyl]prop-2-enal; Ethyl-[4-[[4-[ethyl-[(3-sulfophenyl)methyl]amino]phenylmethyliden]-1-cyclohexa-2,5-dienyliden]-[(3-sulfophenyl)methyl]azanium]-(4-hydroxy-2-sulfophenyl)) oder einer Mischung aus beliebigen dieser Komponenten, entweder natürlichen oder künstlichen Ursprungs in beliebigem Verhältnis.

2. Sorptionszusammensetzung zur Wasserreinigung nach Anspruch 1, wobei die Komponenten die folgende Korngröße aufweisen:
das Sorbens mit Kationenaustauscheigenschaften - 0.3 bis 1,2 mm,
das Sorbens mit Anionenaustauscheigenschaften - 0,3 bis 1,2 mm,
das eisen- und/oder manganselektive Sorbens - 0,3 bis 1,2 mm,
das gekörnte Polymermaterial - 2,5 bis 4 mm,
das gekörnte Filtermaterial - 2 bis 5 mm.

3. Sorptionszusammensetzung nach Anspruch 1 bis 2, wobei die Polymermatrix des Ionenaustauschers M eine Gelstruktur aufweist, vorzugsweise eine makroporöse Struktur.

4. Sorptionszusammensetzung nach einem der Ansprüche 1 bis 3, wobei die Matrix durch Copolymerisation von Styrol und Divinylbenzol oder durch Copolymerisation von Derivaten von Acrylsäure und Divinylbenzol gebildet ist.

5. Sorptionszusammensetzung nach einem der vorhergehenden Ansprüche 1 bis 4, wobei ein Sorbens mit Kationenaustauscheigenschaften aus der Gruppe ausgewählt ist, die aus einem Styroldivinylbenzol-Kationenaustauscher, der eine Gel- oder eine makroporöse Struktur aufweist und funktionale Gruppen starker Säuren umfasst, einem Acryldivinylbenzol-Kationenaustauscher, der eine Gel- oder eine makroporöse Struktur aufweist und funktionale Gruppen schwacher Säuren umfasst, einem Styroldivinylbenzol-Kationenaustauscher, der eine makroporöse Struktur aufweist und Aminomethylphosphonium-Gruppen umfasst, und einem Styroldivinylbenzol-Kationenaustauscher, der eine makroporöse Struktur aufweist und Iminodiacetat-Gruppen umfasst, besteht.

6. Sorptionszusammensetzung nach einem der vorhergehenden Ansprüche 1 bis 5, wobei ein Sorbens mit Anionenaustauscheigenschaften aus der Gruppe ausgewählt ist, die aus einem Styroldivinylbenzol-Anionenaustauscher, der eine Gel- oder eine makroporöse Struktur aufweist und funktionale Trimethylamin-Gruppen umfasst, einem Styroldivinylbenzol-Anionenaustauscher, der eine Gel- oder eine makroporöse Struktur aufweist und funktionale Dimethylethanolamin-Gruppen umfasst, einem Styroldivinylbenzol-Anionenaustauscher, der eine Gel- oder eine makroporöse Struktur aufweist und funktionale Dimethylamin-Gruppen umfasst, einem Phenolformaldehyd-Anionenaustauscher, der eine makroporöse Struktur aufweist und funktionale Gruppen schwacher Basen umfasst, und einen Acryl- oder Methacryldivinylbenzol- Anionenaustauscher, der eine Gel- oder eine makroporöse Struktur aufweist und funktionale Trimethylamin- oder Dimethylamin-Gruppen umfasst, besteht.

7. Sorptionszusammensetzung nach einem der vorhergehenden Ansprüche 1 bis 6, wobei körniges Polymermaterial ein Polymer ist, wobei eine Monomereinheit Ethylen, Oxymethylen, Propylen, Ethylenterephthalat, Vinylchlorid, Vinylidenchlorid, Styrol, Arylsulfon enthält oder ein Copolymer dieser Monomereinheiten ist.

8. Sorptionszusammensetzung nach einem der vorhergehenden Ansprüche 1 bis 7, wobei ein körniges Filtermaterial aus der Gruppe ausgewählt ist, die Anthracit, Quarzsand, Kies, Dolomit, Almandin, Silizium, Aluminosilikat, Borsilikat, aktivierten Kohlenstoff, katalytisch aktivierten Kohlenstoff, Zeolith, Schungit, Pyrolusit, Tonpellets umfasst.

## Revendications

1. Composition de sorption pour purification d'eau comprenant un sorbant présentant des propriétés d'échange de cations, un sorbant présentant des propriétés d'échange d'anions, un sorbant sélectif vis-à-vis du fer et/ou du manganèse, un matériau polymère granulaire, un matériau de filtration granulaire avec le rapport volumétrique suivant des composants :
le sorbant présentant des propriétés d'échange de cations présent au moins à raison de 40 % en volume ;
le sorbant présentant des propriétés d'échange d'anions présent à raison de 1 à 15 % en volume ;
le sorbant sélectif vis-à-vis du fer et/ou du manganèse présent à raison de 1 à 15 % en volume ;
le matériau polymère granulaire présent à raison de 3 à 15 % en volume ;
le matériau de filtration granulaire présent à raison de 3 à 15 % en volume ;
lesdits composants présentent la masse volumique suivante :
le sorbant présentant des propriétés d'échange de cations - 1,15 à 1,35 g/cm³ ;
le sorbant présentant des propriétés d'échange d'anions - 1,02 à 1,1 g/cm³ ;
le sorbant sélectif vis-à-vis du fer et/ou du manganèse - 1,02 à 1,2 g/cm³ ;
le matériau polymère granulaire - moins de 1 g/cm³ ;
la masse volumique du matériau de filtration granulaire est supérieure à celle de tout autre composant ;
lesdits composants présentent les facteurs d'hydrophilie de surface suivants :
le sorbant présentant des propriétés d'échange de cations - > 3 kJ/kJ ;
le sorbant présentant des propriétés d'échange d'anions - 0,2 à 0,6 kJ/kJ ;
le sorbant sélectif vis-à-vis du fer et/ou du manganèse - 1,05 à 3,5 kJ/kJ ;
le matériau polymère granulaire - ≤ 1 kJ/kJ ;
le matériau de filtration granulaire - > 1 kJ/kJ ;
dans laquelle un sorbant sélectif vis-à-vis du fer et/ou du manganèse présente la structure de
M-R₁-R₂-R₃,
dans laquelle M-R₁ est un échangeur d'ions présentant une matrice polymère M et des groupes fonctionnels R₁,
R₂-R₃ est un modificateur,
dans laquelle le groupe R₂ est une fonctionnalité liée à un groupe échangeur d'ions Ri,
le groupe R₃ se situe à la surface du sorbant, et
R₁ est une base faible de diméthylamine, une base forte de triméthylamine, une base forte de diméthyléthanolamine, des groupes fonctionnels aminophosphoniques, carboxyliques, sulfoniques ou (2R,3R,4R,5S)-6-(méthylamino)hexane-1,2,3,4,5-pentoléiques ;
le modificateur R₂-R₃ est choisi dans le groupe constitué du 2,3-dihydroxy-5-({[(2R,3R,4S,5R,6R)-3,4,5,6-tétrakis({3,4-dihydroxy-5-[(3,4,5-trihydroxyphényl)carbonyloxy]phényl}carbonyloxy)oxan-2-yl]méthoxy}carbonyl)phényl-3,4,5-trihydroxybenzoate ; de l'acide 3,4,5-trihydroxybenzoïque ; du (2R,3S)-2-(3,4-dihydroxyphényl)-3,4-dihydro-2H-chromène-3,5,7-triol ; de la 3-phényl-chromén-4-one ; de la 4-phénylcoumarine ; de la 2',4',5',7'-tétrabromofluorescéine ; de la bis[N,N-bis(carboxyméthyl)aminométhyl]fluorescéine ; de l'acide (2S,3S,4S,5R,6S)-3,4,5-trihydroxy-6-(8-hydroxy-9-oxo-9H-xanthén-2-yloxy)-tétrahydro-pyran-2-carboxylique ; d'un sel disodique de 2-amino-5-[(Z)-(4-amino-3-sulfonatophényl)(4-imino-3-sulfonate-2,5-cyclohexadién-1-ylidène)méthyl]-3-méthylbenzènesulfonate ; de la 2,7-diméthylacridine-3,6-diamine ; du chlorure de bis[4-(diméthylamino)phényl]méthanaminium ; du 7,11b-dihydroindéno[2,1-c]chromène-3,4,6a,9,10(6H)-pentol ; d'un sel disodique de 4-amino-3-[4-[4-(1-amino-4-sulfonato-naphtalén-2-yl)diazénylphényl]phényl]diazényl-naphtalène-1-sulfonate ; du chlorure de tris(4-(diméthylamino)phényl)méthylium ; du 3-[4-(diméthylamino)phényl]prop-2-énal ; de l'éthyl-[4-[[4-[éthyl-[(3-sulfophényl)méthyl]amino]phényl-méthylidène]-1-cyclohexa-2,5-diénylidène]-[(3-sulfophényl)méthyl]azanium]-(4-hydroxy-2-sulfophényle)) ou d'un mélange de n'importe lesquels de ces composants produits soit naturellement soit artificiellement en n'importe quel rapport.

2. Composition de sorption pour purification d'eau selon la revendication 1 dans laquelle les composants présentent la granulométrie suivante :
le sorbant présentant des propriétés d'échange de cations - 0,3 à 1,2 mm ;
le sorbant présentant des propriétés d'échange d'anions - 0,3 à 1,2 mm ;
le sorbant sélectif vis-à-vis du fer et/ou du manganèse - 0,3 à 1,2 mm ;
le matériau polymère granulaire - 2,5 à 4 mm ;
le matériau de filtration granulaire - 2 à 5 mm.

3. Composition de sorption selon la revendication 1 à 2, dans laquelle la matrice polymère de l'échangeur d'ions M présente une structure de gel, de préférence une structure macroporeuse.

4. Composition de sorption selon l'une quelconque des revendications 1 à 3, dans laquelle la matrice est formée par copolymérisation de styrène et de divinylbenzène ou copolymérisation de dérivés d'acide acrylique et de divinylbenzène.

5. Composition de sorption selon l'une quelconque des revendications 1 à 4 précédentes, dans laquelle un sorbant présentant des propriétés d'échange de cations est choisi dans le groupe constitué d'un échangeur de cations de styrène-divinylbenzène présentant une structure de gel ou macroporeuse et comprenant des groupes fonctionnels d'acide fort, un échangeur de cations d'acryl-divinylbenzène présentant une structure de gel ou macroporeuse et comprenant des groupes fonctionnels d'acide faible, un échangeur de cations de styrène-divinylbenzène présentant une structure macroporeuse et comprenant des groupes aminométhylphosphonium, et un échangeur de cations de styrène-divinylbenzène présentant une structure macroporeuse et comprenant des groupes iminodiacétate.

6. Composition de sorption selon l'une quelconque des revendications 1 à 5 précédentes, dans laquelle un sorbant présentant des propriétés d'échange d'anions est choisi dans le groupe constitué d'un échangeur d'anions de styrène-divinylbenzène présentant une structure de gel ou macroporeuse et comprenant des groupes fonctionnels de triméthylamine, d'un échangeur d'anions de styrène-divinylbenzène présentant une structure de gel ou macroporeuse et comprenant des groupes fonctionnels de diméthyléthanolamine, d'un échangeur d'anions de styrène-divinylbenzène présentant une structure de gel ou macroporeuse et comprenant des groupes fonctionnels de diméthylamine, d'un échangeur d'anions de phénol-formaldéhyde présentant une structure macroporeuse et comprenant des groupes fonctionnels de base faible, et d'un échangeur d'anions d'acryl- ou méthacryl-divinylbenzène présentant une structure de gel ou macroporeuse et comprenant des groupes fonctionnels de triméthylamine ou de diméthylamine.

7. Composition de sorption selon l'une quelconque des revendications 1 à 6 précédentes, dans laquelle le matériau polymère granulaire est un polymère dans lequel une unité monomère contient de l'éthylène, de l'oxyméthylène, du propylène, du téréphtalate d'éthylène, du chlorure de vinyle, du chlorure de vinylidène, du styrène, de l'arylsulfone, ou est un copolymère de ces unités monomères.

8. Composition de sorption selon l'une quelconque des revendications 1 à 7 précédentes, dans laquelle un matériau de filtration granulaire est choisi dans le groupe comprenant de l'anthracite, du sable de quartz, du gravier, de la dolomite, de l'almandine, du silicium, de l'aluminosilicate, du borosilicate, du charbon actif, du charbon actif catalytique, une zéolite, de la shungite, de la pyrolusite, des boulettes d'argile.
